# EUROPÄISCHE PATENTANMELDUNG

(11) **EP 2 608 045 A2**
(43) Veröffentlichungstag der Anmeldung: **26.06.2013**
(21) Anmeldenummer: 12198909.9
(22) Anmeldetag: 21.12.2012
(51) Int. Cl.: G06F 12/12, H04N 21/433, H04N 21/426, H04N 21/443, H04N 21/2183

(54) **Cachevorrichtung zum Zwischenspeichern**

(30) Priorität: 22.12.2011 US 201161579352 P; 02.02.2012 DE 102012201530
(71) Anmelder: Fraunhofer-Gesellschaft zur Förderung der angewandten Forschung e.V., 80686 München (DE)
(72) Erfinder: Sparenberg, Heiko, 90489 Nürnberg (DE); Schleich, Florian, 96050 Bamberg (DE); Fössel, Siegfried, 91054 Erlangen (DE); Martin, Matthias, 91052 Erlangen (DE)
(74) Vertreter: Stöckeler, Ferdinand

(57) **Zusammenfassung**

Eine Cachevorrichtung zum Zwischenspeichern von skalierbaren Datenstrukturen in einem Zwischenspeicher besitzt eine Verdrängungsstrategie, wonach zur Speicherplatzfreigabe eine Abwärtsskalierung einer oder mehrerer skalierbarer Dateien in dem Zwischenspeicher vorgesehen ist.

## Beschreibung

Ausführungsbeispiele der vorliegenden Erfindung beziehen sich auf eine Cachevorrichtung zum Zwischenspeichern von Dateien und auf ein Verfahren zur Verwaltung eines Zwischenspeichers einer Cachevorrichtung sowie auf ein Computerprogramm.

Ein Zwischenspeicher wird dazu benutzt, um Dateien, z.B. Mediendateien wie Audio- oder Videodateien zwischenzuspeichern und z.B. für einen Decoder bereitzuhalten. Dies bietet den Vorteil, dass die Dateien, die typischerweise aus einzelnen Informations-Paketen bestehen, schneller an den Decoder oder eine CPU (Zentral-Prozessor-Einheit) bzw. GPU (Grafik-Prozessor-Einheit), auf der die Decodierungssoftware ausgeführt, geliefert werden können, was in den meisten Fällen erst eine Echtzeit-Wiedergabe der Mediendatei ermöglicht. Derartige Mediendateien wie z.B. JPEG2000-Dateien, H.264-Dateien oder MPEG4-Dateien sind jedoch typischerweise sehr groß, so dass ein Zwischenspeicher nach der Einlagerung von wenigen derartigen Mediendateien vollständig gefüllt sein kann.

Um den Zwischenspeicher wieder freizugeben und so Speicherplatz für andere Applikationen oder das Einlagern von anderen Mediendateien vorzuhalten, können unterschiedliche Strategien angewendet werden. Eine häufig genutzte Strategie hierbei ist die sogenannte FIFO-Strategie (first in and first out), bei der die Datei, die als erstes eingelesen wurde, als erstes verworfen wird bzw. die für diese Datei benutzten Speicherplätze als freigegeben gekennzeichnet werden. Eine weitere häufig benutzte Strategie ist die sogenannte LRU-Strategie (least recently used), bei der die Datei, auf die am längsten nicht zugegriffen wurde, freigegeben wird. Entsprechend der LFU-Strategie (least frequently used) können die Dateien freigegeben werden, auf die am seltensten zugegriffen wurde. Diese drei Strategien bzw. Verfahren zur Speicherplatzfreigabe haben jedoch gemein, dass immer die vollständige Datei bzw. alle zu dieser Datei gehörenden Informations-Pakete (Datenblock) komplett aus dem Zwischenspeicher (Cache) entfernt werden.

Bei einem wiederholten Zugriff auf die verworfene Datei muss folglich die vollständige Datei wieder von dem Massespeichermedium eingelesen und zwischengespeichert werden. Dies verursacht beim wiederholten Aufrufen einer zuvor eingelagerten, dann aber verworfenen Datei erhebliche und meist unnötige Pufferzeiten. Infolge dessen kommt der gewählten Freigabestrategie eine große Bedeutung zu. Allerdings ist mit den oben beschriebenen Verfahren eine Selektion der zu verwerfenden Datei oft schwierig, insbesondere wenn wenige, sehr große Dateien oder mehrere große zusammengehörende Dateien eines Datei-Satzes in den Zwischenspeicher eingelagert sind. Folglich besteht der Bedarf nach einem verbesserten Ansatz zur Verwaltung des Zwischenspeichers.

Aufgabe der vorliegenden Erfindung ist es, eine Vorrichtung zum Zwischenspeichern von Dateien und insbesondere von Mediendateien zu schaffen.

Die Aufgabe wird durch eine Cachevorrichtung gemäß Anspruch 1 sowie ein Verfahren zur Verwaltung eines Speicherplatzes einer Cachevorrichtung gemäß Anspruch 15 gelöst.

Ausführungsbeispiele der vorliegenden Erfindung schaffen eine Cachevorrichtung zum Zwischenspeichern von Dateien in einem Zwischenspeicher, wobei die Cachevorrichtung eine Verdrängungsstrategie besitzt, wonach zur Speicherplatzfreigabe eine Abwärtsskalierung einer oder mehrerer skalierbarer Dateien in dem Zwischenspeicher vorgesehen ist.

Kerngedanke der vorliegenden Erfindung ist es, dass es möglich ist, einen Zwischenspeicher besser auszunutzen, indem selektiv nur einzelne Teile der ein oder mehreren skalierbaren Dateien, nämlich einzelne Informations-Pakete freigegeben werden. Skalierbare Dateien, die typischerweise ein Informations-Paket einer Grund-Informations-Ebene und Informations-Pakete einer Nicht-Grund-Informations-Ebene aufweist, bieten die Möglichkeit, dass beim Ausführen die Informations-Pakete der Nicht-Grund-Informations-Ebene verworfen werden können. Infolge der fehlenden Informations-Pakete der Nicht-Grund-Informations-Ebene ist zwar der Detailgrad, z.B. eine Auflösung oder eine Qualität (bei einer skalierbaren Mediendatei) reduziert, wobei die Datei an sich dennoch darstellbar bleibt. Diese Eigenschaft kann bei der Verdrängungsstrategie genutzt werden. Hierbei werden gezielt die Informations-Pakete der Nicht-Grund-Informations-Ebene freigegeben und bei der Ausgabe durch leere Informations-Pakete ersetzt. Infolgedessen kann erreicht werden, dass die zwischengespeicherte Datei bei einem wiederholten Zugriff auf dieselbe direkt, d.h. ohne vorheriges Puffern, darstellbar ist und gleichzeitig der benötigte Speicherplatz freigegeben werden konnte.

Entsprechend weiteren Ausführungsbeispielen können unterschiedliche Verdrängungsstrategien hierbei angewendet werden, so dass unterschiedliche Informations-Pakete von Nicht-Grund-Informations-Ebenen durch leere Informations-Pakete ersetzt werden. Bevorzugter Weise erfolgt die Speicherplatzfreigabe so, dass eine Speicherbelegung durch ein leeres oder unvollständig eingelagertes Informations-Paket freigegeben wird. Entsprechend weiteren Ausführungsbeispielen erfolgt die Speicherplatzfreigabe so, dass zuerst die Speicherplätze eines Informations-Pakets freigegeben werden, das Informationen einer detailliertesten Erweiterungs-Informations-Ebene aufweist.

Entsprechend weiteren Ausführungsbeispielen ist es auch möglich, bei der Speicherplatzfreigabe einen Freigabestatus zu protokollieren. Dieser Freigabestatus dient dazu, dass die verworfenen Informations-Pakete erneut nachgeladen werden können oder dass bei der Ausgabe die verworfenen Informations-Pakete durch leere Informations-Pakete ersetzt werden, damit die skalierbare Datei in der Struktur ausgegeben wird, in der diese von der aufrufenden Applikation erwartet wird.

Ausführungsbeispiele der vorliegenden Erfindung werden anhand der beiliegenden Zeichnungen näher erläutert. Es zeigen:
- Fig. 1: eine schematische Darstellung einer Vorrichtung zur Zwischenspeicherung einer skalierbaren Original-Datei mit einer integrierten Cachevorrichtung;
- Fig. 2: eine schematische Darstellung einer skalierbaren Datei;
- Fig. 3a-3c: eine schematische Illustration des Vorgangs des Nachladens bzw. wiederholten Aufrufens einer skalierbaren Bild-Datei;
- Fig. 4: eine schematische Darstellung eines Datenstroms für zwei aufeinanderfolgende Frames einer bewegten Bildsequenz;
- Fig. 5: eine schematische Darstellung einer Cachevorrichtung zum Zwischenspeichern gemäß einem Ausführungsbeispiel; und
- Fig. 6a-6c: schematische Diagramme von Datendurchsatzraten bei Verwendung der Vorrichtung zur Zwischenspeicherung in unterschiedlichen Gegenüberstellungen.

Bevor nachfolgend Ausführungsbeispiele der vorliegenden Erfindung anhand der beiliegenden Figuren näher erläutert werden, wird darauf hingewiesen, dass gleiche Elemente oder gleichwirkende Elemente mit gleichen Bezugszeichen versehen sind, so dass die Beschreibung derer austauschbar ist bzw. aufeinander angewendet werden kann.

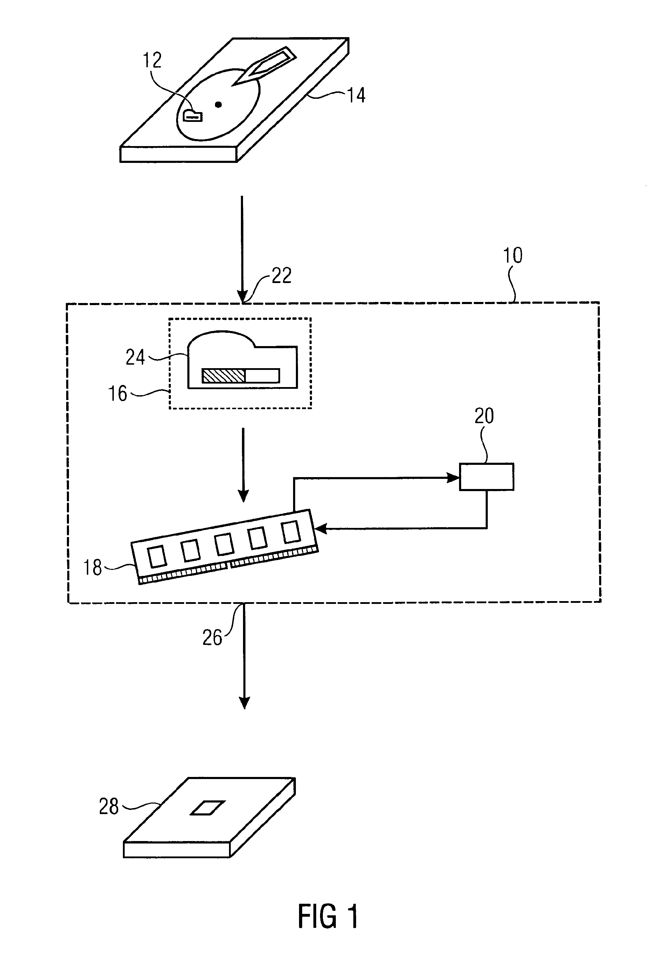

Fig. 1 zeigt eine Vorrichtung 10 zur Zwischenspeicherung einer skalierbaren Original-Datei 12, die beispielsweise auf einem Massenspeichermedium 14, wie einer Festplatte oder einem anderen physikalischen Medium, gespeichert ist. Die Vorrichtung 10 zur Zwischenspeicherung umfasst einen Proxy-Datei-Generator 16 und einen Zwischenspeicher 18 sowie die optionale Cachevorrichtung 20. Die Cachevorrichtung 20 ist mit dem Zwischenspeicher 18 verbunden bzw. kann Bestandteil des Zwischenspeichers 18 sein. Der Proxy-Datei-Generator 16 bzw. die Vorrichtung zur Zwischenspeicherung 10 ist über eine erste Schnittstelle 22 mit dem Massenspeichermedium 14 verbunden, um die Original-Datei 12 oder eine Mehrzahl von Original-Dateien eines Original-Datei-Satzes einzulesen und als Proxy-Datei 24 in dem Zwischenspeicher 18 zwischenzuspeichern. Des Weiteren weist die Vorrichtung 10 eine zweite Schnittstelle 26 auf, mittels der die Proxy-Datei 24 bzw. die Mehrzahl der Proxy-Dateien eines Proxy-Datei-Satzes von dem Speicher 18 an einen Decoder 28 oder Prozessor 28, der beispielsweise eine CPU (Zentralprozessoreinheit) oder GPU (Graphikprozessoreinheit) aufweist, ausgegeben werden kann.

Nachfolgend wird die Funktionalität der Vorrichtung 10 zur Zwischenspeicherung einer oder mehrerer skalierbaren Original-Dateien 12 zusammen mit der Funktionalität der Cachevorrichtung 20 detailliert erläutert. Ein typisches Anwendungsgebiet von skalierbaren Dateien (vgl. skalierbare Original-Datei 12 bzw. skalierbare Proxy-Datei 24) ist die Speicherung von Videosequenzen oder Audiotiteln in sogenannten Mediendateien, die eine zeitliche Dimension aufweisen. Hierbei ist zwischen zwei Typen zu unterscheiden: Einerseits kann eine Mediendatei mit einer zeitlichen Komponente in einer einzelnen Original-Datei 12, die alle Informations-Pakete für zeitlich aufeinanderfolgende Frames umfasst, gespeichert sein. Typische Vertreter dieses Typs sind H.264-Dateien. Eine andere Form der Speicherung von Echtzeit-Medienformaten kommt beispielsweise bei JPEG2000 zum Einsatz. Hier ist jedes Frame in einer eigenen Original-Datei 12 gespeichert, so dass die zeitliche Komponente dadurch entsteht, dass einzelne Original-Dateien für zeitlich aufeinanderfolgende Frames, die zu einem Original-Datei-Satz gehören, nacheinander dargestellt werden. Unabhängig davon, ob eine Vielzahl von Frames in der Original-Datei 12 bzw. der Proxy-Datei 24 oder in dem Original-Datei-Satz bzw. einem Proxy-Datei-Satz gespeichert sind, weisen die Dateien der beide beschriebenen Mediendateientypen eine vergleichbare Struktur auf, die eine Skalierbarkeit ermöglicht.

Die Struktur einer solchen skalierbaren Datei ist typischerweise durch einen Header, ein erstes Informations-Paket für eine Grund-Informations-Ebene sowie durch weitere Informations-Pakete für eine Nicht-Grund-Informations-Ebene definiert. Zur Wiedergabe bzw. Dekodierung einer solchen skalierbaren Datei reichen prinzipiell der Header und das erste Informations-Paket der Grund-Informations-Ebene aus. Der Decoder 28 erwartet allerdings typischerweise die Übermittlung aller durch den Header angekündigten Informations*-Pakete aller Informations-Ebenen in der durch die Original-Datei 12 vorgegebenen Struktur, auch wenn dies zu Dekodierungszwecken nicht zwingenderweise notwendig wäre. In anderen Worten ausgedrückt heißt das, dass für eine fehlerfreie Dekodierung alle Informations-Pakete aller Informations-Ebenen von der Original-Datei 12 an den Decoder 28 zu übertragen sind oder dass zumindest die wesentlichen Informations-Pakete als Proxy-Datei 24 so an den Decoder 28 zu übermitteln sind, dass diese hinsichtlich Struktur der Original-Datei 12 gleicht.

Um dies sicherzustellen, wird durch den Proxy-Datei-Generator 16 die zu der Original-Datei 12 strukturgleiche Proxy-Datei 24 z.B. als leere Datei in dem Zwischenspeicher 18 angelegt, die in dieser Form bereits kompatibel von jedem geeigneten Decoder 28 ausführbar ist, unabhängig davon, welche Fehlerroutine der Decoder 28 aufweist. In der leeren Proxy-Datei 24 ist zumindest der Header der Original-Datei 12 und bevorzugter Weise auch das erste aus der Original-Datei 12 ausgelesene Informations-Paket der Grund-Informations-Ebene eingefügt. Das Einfügen erfolgt an der durch die Struktur festgelegten Stelle, wobei die fehlenden Informations-Pakete der Nicht-Grund-Informations-Ebene durch leere Informations-Pakete gleicher Größe und Anordnung ersetzt sind. Durch dieses Vorgehen wird die Struktur der Original-Datei 12 nachgebildet, wobei allerdings bei der zwischengespeicherten Proxy-Datei 24 der Informationsgehalt gegenüber der Original-Datei 12 reduziert ist.

Die Vorrichtung 10 kann so in das Dateisystem bzw. das Betriebssystem integriert sein, dass der Decoder 28 oder die auf dem Prozessor 28 aufgerufene Anwendung (DecodierSoftware) bei einem Zugriff auf die Original-Datei 12, die Teil des Original-Datei-Satzes sein kann, direkt auf die Proxy-Datei 24, die analog Teil des Proxy-Datei-Satzes sein kann, zugreift. Die oben erwähnte zeitliche Dimension von Mediendateien limitiert die zur Verfügung stehende Zeit beim Laden, da Mediendateien mit einer vorgegeben Framerate bzw. Sampling-Rate wiedergegeben werden müssen, um Ruckler (bei der Videowiedergabe) oder Aussetzer (bei der Audiowiedergabe) zu vermeiden. Infolgedessen muss das jeweilige Frame bzw. Sample in dem vorgegebenen Zeitfenster übertragen werden. Reicht die Übertragungsrate von dem Massenspeichermedium 14 zu dem Decoder 28 nicht aus, bietet die hier beschriebene Vorrichtung 10 die Möglichkeit, Informations-Pakete der Nicht-Grund-Informations-Ebenen selektiv zu verwerfen und so die Datenrate zu verkleinern. Der Decoder 28 erhält folglich beim Zugriff nur einen bestimmten Teil der angeforderten Daten, z.B. Header und das erste Informations-Paket, diesen allerdings in der erforderlichen Zeit und kann so die (skalierbare) Mediendatei bzw. Video- oder Audiodatei durch Ausnutzung der Skalierung auf Dateisystemebene in Echtzeit wiedergeben. In anderen Worten ausgedrückt, ermöglicht es ein Dateisystem (Kombination aus Datenträger, Treiber und Dateisystem), welches die Skalierbarkeit von Dateien nutzt, Engpässe bei der Echtzeitwiedergabe zu kompensieren bzw. eine uneingeschränkt lauffähige Datei, nämlich die Proxy-Datei 24, an den Decoder 28 zu übermitteln, auch wenn der Datendurchsatz zwischen dem Massenspeichermedium 14 und der Schnittstelle 22 für die zu übertragende Datenmenge und die zur Verfügung stehende Zeit zu gering ist. Zwar liefert die vorgestellte Methode nicht die Original-Datei 24 mit der vollen Auflösung oder dem maximalen Signal/RauschVerhältnis, dies ist aber auch in vielen Anwendungsszenarien, z.B. bei der Vorschau eines Films bei der Postproduktion, nicht nötig. Viel wichtiger ist es, dass die Mediendatei nicht extra vollständig für eine kurze Vorschau zeitaufwendig auf ein schnelles Speichersystem kopiert werden muss.

Informations-Pakete für Nicht-Grund-Informations-Ebenen können z.B. bei einer erneuten Anfrage an das Dateisystem aus der Original-Datei 12 bzw. dem Original-Datei-Satz nachgeladen und in die Proxy-Datei 24 bzw. den Proxy-Datei-Satz eingefügt werden. Hierdurch können den Grund-Informationen erweiterte Informationen hinsichtlich einer erweiterten Auflösung, hinsichtlich einer erweiterten Qualität oder hinsichtlich einer erweiterten Komponente, wie z.B. einer Tiefeninformation oder 3D-Komponente, hinzugefügt werden. Dies ermöglicht eine qualitativ hochwertige Darstellung bei einer wiederholten Wiedergabe der Mediendatei. Ein derartiges Nachladen erfolgt bevorzugter Weise dann, wenn die Proxy-Datei 24 oder die mehreren Proxy-Dateien des Proxy-Dateisatzes wiederholt von dem Decoder 28 aufgerufen werden, so dass die erweiterten Informations-Pakete für ein Frame in dem Zeitfenster, in welchem das vorherige Frame (bzw. die vorherige Proxy-Datei des Proxy-Datei-Satzes) an den Decoder 28 ausgegeben wird, zu den bereits eingelagerten Informations-Paketen ergänzt werden, d.h. also bevor das jeweilige Frame (bzw. die jeweilige Proxy-Datei) dem Decoder 28 zur Verfügung gestellt wird. Dieses Nachladen erfolgt typischerweise iterativ, solange bis alle Informations-Pakete der ein oder mehreren Original-Dateien 12 in die eine oder mehreren Proxy-Dateien 24 übertragen sind. Dieses iterative Vorgehen bietet den Vorteil, dass bei einem ersten Aufrufen einer Mediendatei eine schnelle Wiedergabe bzw. Vorschau mit verminderter Qualität erfolgen kann und bei weiteren Aufrufen ab einem vorbestimmten Frame (nach erfolgreichem Nachladen weiterer Nicht-Grund-Informations-Ebenen) eine qualitativ hochwertige Ausgabe erfolgt. Die Anzahl an Iterationen hängt einerseits von der Framerate, andererseits von der Auslesegeschwindigkeit und der Dateigröße der Original-Datei 12 bzw. des Original-Datei-Satzes ab. Dieses beschriebene iterative Nachladen erfolgt alternativ im Hintergrund, d.h. wenn kein Zugriff auf das Massenspeichermedium 14 erfolgt bzw. wenn das erste Bereitstellen der ein oder mehreren Proxy-Dateien 24 beendet ist. Die Einlagerung der Proxy-Datei 24 in den Zwischenspeicher 18 dient also dem Zweck, dass diese bei wiederholten Anfragen dem Decoder 28 vollständig und direkt zur Verfügung gestellt werden, ohne dass ein Zugriff auf das Massenspeichermedium 14 notwendig ist.

Sollte der Zwischenspeicher 18 voll sein oder weniger Speicherplatz zur Verfügung stellen als für die Einlagerung einer weiteren Datei notwendig ist, kann der Zwischenspeicher 18 gemäß einer Verdrängungsstrategie durch die Cachevorrichtung 20 Speicherplatz freigegeben werden.

All diese Zwischenspeicherstrategien verfolgen das Ziel, die Dateien aus dem Speicher zu löschen, bei denen die Wahrscheinlichkeit am höchsten ist, dass diese kurzfristig nicht erneut benötigt werden. Hier wird bei der Verdrängungsstrategie die Abwärtsskalierbarkeit der eingelagerten Proxy-Dateien 24 oder Allgemein mehrerer eingelagerter skalierbarer Dateien ausgenutzt. Hierzu analysiert die Cachevorrichtung 20 den Inhalt des Zwischenspeichers 18 und gibt selektiv Speicherplätze der Proxy-Datei 24, in denen Informations-Pakete von Nicht-Grund-Informations-Ebenen eingelagert sind, frei. Das Freigeben der Speicherplätze erfolgt entsprechend der gewählten Verdrängungsstrategie, so dass beispielsweise zuerst alle leeren oder unvollständig eingelagerten Informations-Pakete verworfen bzw. als freigegeben gekennzeichnet werden oder dass zuerst alle detailliertesten Erweiterungs-Informations-Ebenen freigegeben werden. Entsprechend einer weiteren Verdrängungsstrategie kann die Speicherplatzfreigabe so erfolgen, dass für alle Frames erst die Qualität auf einen vorgegebenen Bruchteil, wie z.B. 50 %, der ursprünglichen Qualität der Original-Datei 12 bzw. des Original-Datei-Satzes reduziert wird und dann die Auflösung bis auf einen vorgegebenen Bruchteil, wie z.B. 50 % der ursprünglichen Auflösung reduziert wird, oder umgekehrt. Alternativ hierzu können auch Auflösung und Qualität gleichzeitig reduziert werden. Eine weitere Alternative wäre es, anstelle oder zusätzlich zur Qualität oder Auflösung eine weitere Komponente, z.B. nur für einen Bereich zu reduzieren. Sollte zusätzlich der Bedarf nach weiteren freien Speicherplatz bestehen, kann die Freigabe entsprechend modifizierten Verdrängungsstrategien für skalierbare Dateien oder entsprechend konventionellen Verdrängungsstrategien, wie z.B. entsprechend der FIFO-Strategie, bei der die Datei, die als erstes eingelesen wurde, verdrängt wird, erfolgen.

Durch die Cachevorrichtung 20 wird bei der Speicherplatzfreigabe protokolliert, welche Informations-Pakete der Proxy-Dateien 24 verworfen worden sind, um bei der wiederholten Ausgabe der Proxy-Datei 24 bzw. des Proxy-Datei-Satzes die verworfenen Informations-Pakete durch leere Informations-Pakete und/oder durch neu von der Original-Datei 12 bzw. dem Original-Datei-Satz geladene Informations-Pakete zu ersetzen. Somit erfolgt die Ausgabe jeder Proxy-Datei 24 durch die Vorrichtung 10 wiederum so, dass die Proxy-Datei 24 in der entsprechenden Struktur der Original-Datei 12 bereitgestellt wird. Es stellt sich ein Effekt der Komprimierung der in dem Zwischenspeicher 18 eingelagerten Proxy-Datei 24 ein, ohne dass die Gesamtfunktionalität beeinträchtigt wird. Für den Fall, dass Informations-Pakete verworfen werden, die Erweiterungs-Informationen einer Nicht-Grund-Informations-Ebene beinhalten, reduziert sich der Informationsgehalt der Proxy-Datei, z.B. unter Reduzierung der Auflösung. Für den Fall, dass nur leere oder unvollständig eingelagerte Informations-Pakete verworfen werden, bleibt der Informationsgehalt konstant, da nur komplett eingelesene Pakete an den Aufrufer übermittelt werden.

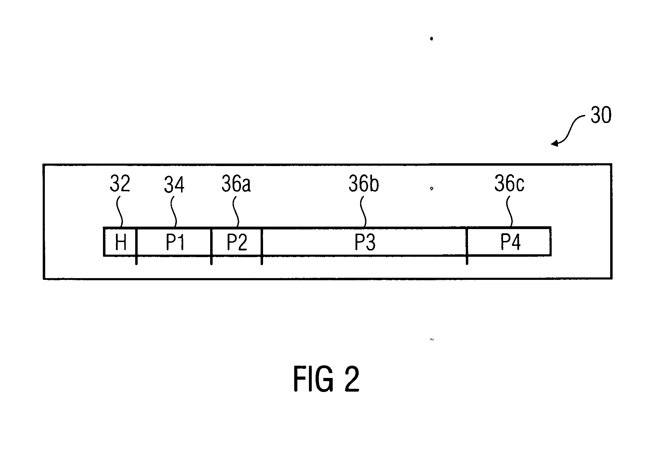

Bezug nehmend auf Fig. 2 wird die grundsätzliche Struktur einer skalierbaren Datei, wie z.B. einer einzelnen JPEG2000-Datei eines Datei-Satzes, einer H.264-SVC-Datei oder einer MPEG4-SLC-Datei genau erläutert. Die Skalierbarkeit basiert beispielsweise auf Inkrementen bzw. einer inkrementellen Bildauflösung oder inkrementellen Qualität. Fig. 2 zeigt einen Datenstrom 30 z.B. einer skalierbaren JPEG2000-Datei für ein erstes Frame, welcher einen Header 32, ein Informations-Paket 34 für eine Grund-Informations-Ebene sowie drei Informations-Pakete 36a, 36b und 36c für Nicht-Grund-Informations-Ebenen aufweist. Die Informations-Pakete 34, 36a, 36b und 36c sind in einer bestimmten Reihenfolge angeordnet, die zusammen mit der Größe der jeweiligen Informations-Pakete 34, 36a, 36b und 36c die Struktur festlegen, wobei die einzelnen Informations-Pakete 34, 36a, 36b und 36c nicht zwingendermaßen dieselbe Länge aufweisen müssen. Diese erste Struktur der Original-Datei 30 ist in dem Header 32 als Strukturinformation gespeichert. Es wird angemerkt, dass die einzelnen Informations-Pakete 34, 36a, 36b und 36c jeweils optional einen eigenen Header, der z.B. Strukturinformationen über das jeweilige Informations-Pakete 34, 36a, 36b und 36c beinhaltet, aufweisen können.

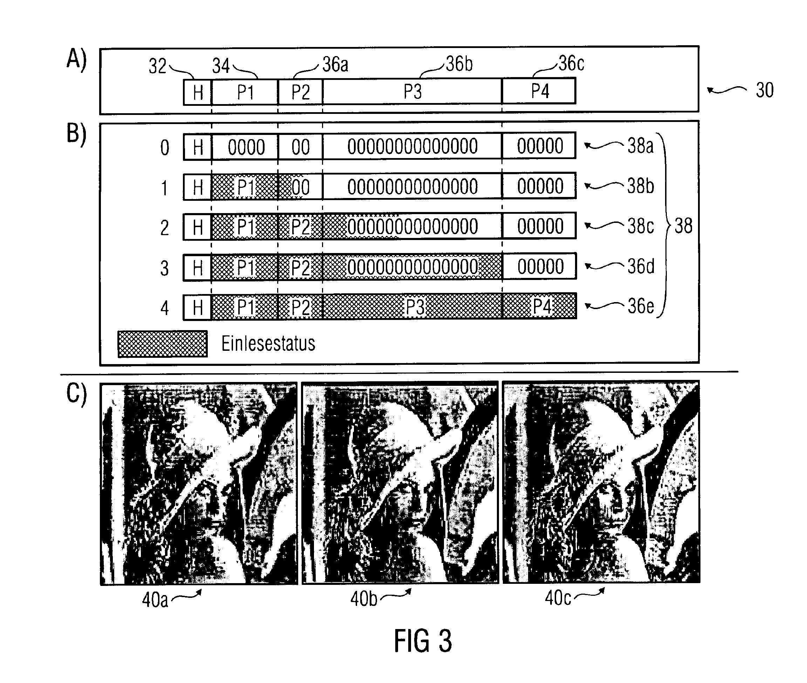

Die Informations-Pakete 36a, 36b und 36c der Nicht-Grund-Informations-Ebenen, die auch Erweiterungs-Informations-Ebenen genannt werden, erweitern die Information der Grund-Informations-Ebene, die in dem Informations-Paket 34 gespeichert sind, und beinhalten beispielsweise Informationen, die zur Erhöhung der Auflösung oder zur Verbesserung der Qualität bzw. Signal/Rausch-Abstand der in diesem Frame gespeicherten Bilddatei dienen (vgl. Inkremente). Insofern sind die Informations-Pakete 36a, 36b und 36c die sogenannten Detailpakete, die nicht notwendigerweise erforderlich sind, um die jeweilige Datei abzuspielen. Allerdings würde ein simples Verwerfen dieser Informations-Pakete 36a, 36b und 36c auf Dateisystemebene, z.B. bei Feststellung fehlender Datendurchsatzraten des Datenträgers (I/O-Leistung) die erste Struktur der abzuspielenden Original-Datei 30 bzw. des Datenstroms 30 so verändern, dass ein Fehler im Decoder oder in der Decodiersoftware hervorgerufen werden könnte. Hintergrund hierzu ist, dass eine Decodiersoftware oder ein Decoder durch das Auslesen des Headers 32 und die darin gespeicherte Strukturinformation davon ausgeht, dass eine Bilddatei mit einer bestimmten Anzahl an Informations-Paketen, Dateigröße und Auflösung bereitgestellt wird. Durch das simple Verwerfen der Informations-Pakete 36a, 36b und 36c würde sich jedoch die Dateigröße und die Struktur, d.h. die Position der einzelnen Informations-Pakete innerhalb des Datenstroms ändern, so dass eine Decodiersoftware oder Decoder nicht in der Lage wäre, auf eine solche spontane Änderung zu reagieren. Um derartige Fehler zu vermeiden, können wie Bezug nehmend auf Fig. 1 erläutert, die verworfenen Informations-Pakete durch leere Informations-Pakete ersetzt werden, die die zu erwartende Struktur wieder herstellen. Das genaue Vorgehen beim unvollständigen Einlesen des Datenstroms 30 bzw. des Ergänzens des Datenstroms 30 durch leere Informations-Pakete wird Bezug nehmend auf Fig. 3 näher erläutert.

Fig. 3a zeigt den Datenstrom 30 eines Einzelbildes (Frames), der die Original-Datei darstellt, während Fig. 3b das iterative Einlesen der Informations-Pakete aus der Original-Datei 30 in die Proxy-Datei 38 illustriert. Die Qualitätsunterschiede je nach Auslesestatus (Auslesefortschritt) der Proxy-Datei 38 werden in Fig. 3c illustriert. Wie oben erläutert weist die hier dargestellte Original-Datei 30 die erste Struktur, definiert durch die Reihenfolge und Größe der einzelnen Informations-Pakete 34, 36a, 36b und 36c, auf. Im ersten Schritt, d.h. bei der Initialisierung, wird durch den Proxy-Datei-Generator auf Basis der Strukturinformationen des eingelesenen Headers 32 eine leere Proxy-Datei 38a erzeugt, die den Header 32 sowie leere Informations-Pakete anstelle der Informations-Pakete 34, 36a, 36b und 36c der Original-Datei 30 umfasst. Der Header 32 der Proxy-Datei 38a entspricht dem Header 32 der Original-Datei 30.

Die leeren Informations-Pakete sind so erzeugt, dass diese eine zweite Struktur der Proxy-Datei 38a bilden, die der ersten Struktur der Original-Datei 30 entspricht. Deshalb sind die einzelnen leeren Informations-Pakete gleich groß im Vergleich zu den Informations-Paketen der Original-Datei 30 und an der durch die zweite (bzw. erste) Struktur vorgegebene Position angeordnet. Diese leeren Informations-Pakete können beispielsweise durch Nullen gefüllt sein oder eine andere regelmäßige Bit-Folge aufweisen, aus der keine erweiterte Information hervorgeht. Durch ein Null-Paket erfolgt eine Reservierung des Speicherplatzes für ein vorbestimmtes Informations-Pakete. In anderen Worten ausgedrückt heißt das, dass die Metadaten der Proxy-Datei 38a und der Original-Datei 30 identisch sind, wobei allerdings die Informations-Pakete 34, 36a, 36b und 36c vorerst substituiert sind. Beim Abspielen dieser Proxy-Datei 38a würde ein JPEG2000-Decoder ein graues Bild ausgeben, da noch keine Informations-Pakete bzw. nur sogenannte Null-Pakete in die Proxy-Datei 38a eingefügt sind.

Das Einlesen und Einfügen der vorerst substituierten Informations-Pakete 34, 36a, 36b und 36c erfolgt im nächsten Schritt. In der Proxy-Datei 38b ist das erste Informations-Paket 34, das Informationen der Grund-Informations-Ebene enthält, aus der Original-Datei 30 eingelesen und nach dem Header 32 eingefügt. Wie anhand des grauen Balkens zu erkennen ist, sind auch schon Teile des zweiten Informations-Pakets 36a eingelesen, wobei diese allerdings nicht verwendet werden können, da das zweite Informations-Paket 36a nicht vollständig eingelesen bzw. in die Proxy-Datei 38b kopiert ist. In anderen Worten ausgedrückt, heißt das, dass die Informations-Pakete 32, 34, 36a, 36b und 36c bzw. der Datenstrom der Informations-Pakete 32, 34, 36a, 36b und 36c in dem Zwischenspeicher 18 ohne Rücksicht auf die Grenzen der einzelnen Informations-Pakete 32, 34, 36a, 36b und 36c zwischengespeichert werden. Für die Ausgabe der Proxy-Datei 38b wird das teilweise bzw. unvollständig eingelesene Informations-Paket 36a sowie die nicht eingelesenen Informations-Pakete 36b und 36c durch leere Informations-Pakete (Null-Pakete) ersetzt, wobei alle Informations-Pakete 34, die komplett eingelesen wurden, an den Decoder zurückgegeben werden. Für den Decoder bedeutet das, dass er ab einer bestimmten Stelle nur leere Informations-Pakete erhält, was den gleichen Effekt hat, als wenn er keine Pakete mehr bekommen würde. Das Vorhandensein der leeren Informationspakete fügt dem bisher dekodierten Bild zwar keine weiteren Detailinformationen hinzu, erlaubt aber die Einhaltung der Dateistruktur inkl. des internen Aufbau derer. Das Bild 40a ist das Ergebnis der Decodierung der Proxy-Datei 38b und basiert ausschließlich auf Informationen der Grund-Informations-Ebene (vgl. Informations-Pakets 34). Folglich weist das Bild 40a deutliche Block-Artefakte auf, die sich auf die fehlenden Informations-Pakete 36a, 36b und 36c der Erweiterungs-Informations-Ebene zurückführen lassen.

Parallel zu dem Einlesen der Informations-Pakete 34 und 36a erfolgt eine Protokollierung der noch nicht bzw. unvollständig eingelesenen Informations-Pakete mittels eines sogenannten Einlesestatus, der noch zu ladende Informations-Pakete 36a, 36b und 36c der Nicht-Grund-Informations-Ebene anzeigt. Auf Basis dieses Einlesestatus kann die Vorrichtung beim wiederholten Einlesen an der Stelle mit dem Einlesen fortfahren, an der bei dem vorherigen Einlese-Vorgang abgebrochen wurde.

Beim Fortfahren des Einlesens wird nun das zweite Informations-Pakete 36a der Nicht-Grund-Informations-Ebene vervollständigt und Teile des dritten Informations-Pakets 36b eingelesen, woraus die Proxy-Datei 38c resultiert. Das zweite Informations-Paket 36a ist in die Proxy-Datei 38c an der durch die Struktur vorgegebenen Stelle (nach dem ersten Informations-Paket 34) eingefügt, die in der Proxy-Datei 38b durch ein leeres Informations-Paket reservierten war. Beim nächsten Einlese-Vorgang wird das dritte Informations-Paket 36b weiter vervollständigt, so dass die Proxy-Datei 38d erzeugt wird. Hier ist das dritte Informations-Paket 36b nicht vollständig eingelesen (vgl. grauer Balken), so dass dieses wiederum durch ein leeres Informations-Paket ersetzt wird. Das Bild 40b resultiert aus der Darstellung der Proxy-Datei 38c und der Proxy-Datei 38d her und illustriert die verbesserte Auflösung gegenüber dem Bild 40a, die das Ergebnis der eingeflossenen Informationen des Informations-Pakets 36a, also Informationen einer Erweiterungs-Informations-Ebene, ist.

Die beim weiteren Einlesen vervollständigte Proxy-Datei 38e enthält zusätzlich zu dem Informations-Paket 34 der Grund-Informations-Ebene alle Informations-Pakete 36a, 36b und 36c der Nicht-Grund-Informations-Ebene. Das Bild 40c ist das Resultat der Decodierung der Proxy-Datei 38e. Da in dem Bild 40c alle Informationen der Informations-Pakete 36a, 36b und 36c der Nicht-Grund-Informations-Ebenen verarbeitet sind, weist dieses folglich gegenüber den Bildern 40a oder 40b eine gesteigerte Auflösung und/oder Qualität auf, die der in der Original-Datei 30 gespeicherten Auflösung bzw. Qualität entspricht. Zusammenfassen kann festgestellt werden, dass wie zu erwarten ist, die Qualität der Bilder 40a bis 40c besser wird je weniger Daten durch die Vorrichtung in der Proxy-Datei ersetzt werden mussten.

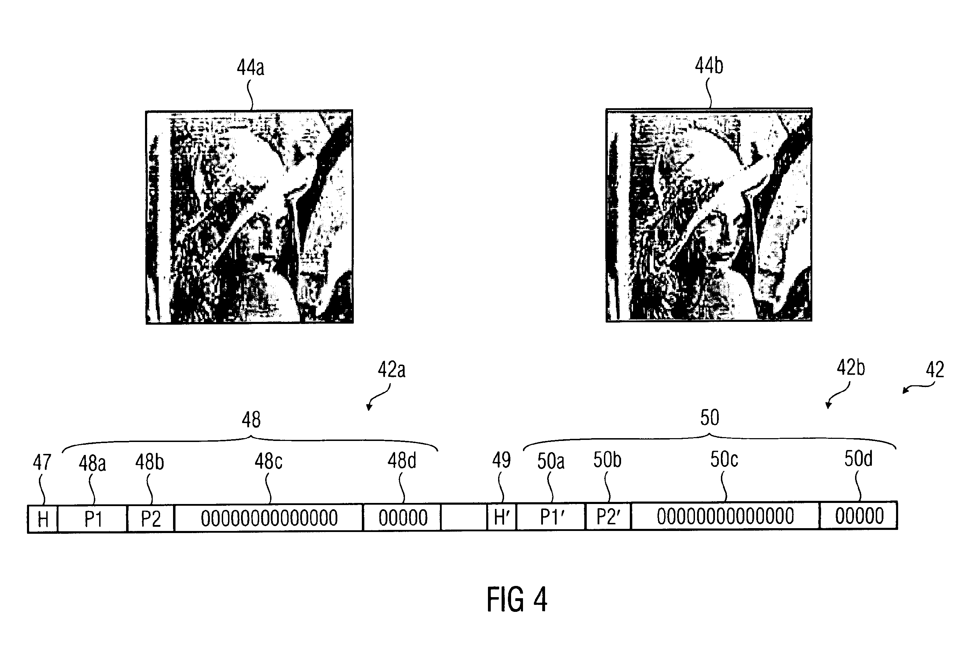

Fig. 4 zeigt einen Proxy-Datei-Satz 42, in der eine Bildfolge gespeichert ist. Die Bildfolge umfasst zwei aufeinanderfolgende Frames 44a und 44b, wobei jedes Frame in einer Proxy-Datei 42a bzw. 42b gespeichert ist. Der Proxy-Datei-Satz 42 weist eine erste Proxy-Datei 42a mit einem ersten Header 47 sowie Informations-Pakete 48 für das erste Frame 44a und eine zweite Proxy-Datei 42b mit einem zweiten Header 49 sowie Informations-Pakete 50 für das zweite Frame 44b auf. Jeder Header 47 bzw. 49 für die jeweilige Proxy-Datei 42a bzw. 42b gibt Auskunft darüber, wie viele Informations-Pakete im aktuellen Frame folgen und wie groß jedes einzelne Informations-Paket ist. Im Original-Datei-Satz weist die erste Original-Datei für das erste Frame 44a ein erstes Informations-Paket 48a der Grund-Informations-Ebene sowie drei weitere Informations-Pakete 48b, 48c und 48d der Nicht-Grund-Informations-Ebene auf. Die zweite Original-Datei des Original-Datei-Satzes für das zweite Frame 44b weist ebenso vier Informations-Pakete 50 auf, bei denen das erste Informations-Paket 50a zu der Grund-Informations-Ebene gehört und die drei weiteren Informations-Pakete 50b, 50c und 50d zu der Nicht-Grund-Informations-Ebene.

Die zwei aufeinanderfolgenden Frames 44a und 44b werden beispielsweise mit einer Framerate von 24 Bildern pro Sekunde (fps, frames per second) wiedergegeben, so dass die Zeit zwischen dem Einlesen der ersten Proxy-Datei 42a mit den Informations-Paketen 48 des ersten Frames 44a und der zweiten Proxy-Datei 42b mit den Informations-Paketen 50 des zweiten Frames 44b beschränkt ist. Das Massenspeichermedium ist zu langsam, um alle Informations-Pakete 48 bzw. 50 für die zwei aufeinanderfolgenden Bilder 44a und 44b in einer bestimmten Zeit zu liefern, so dass die bestimmte Anzahl an Bildern mit der vorbestimmten Framerate nicht mit der vollen Datenrate ausgegeben werden kann. Deshalb erfolgt bei der ersten Proxy-Datei 42a ein Ersetzen der unvollständig geladenen bzw. nicht geladenen Informations-Pakete, z.B. 48c und 48d, durch leere Informations-Pakete, so dass ab einem bestimmten Zeitpunkt der Header 49 und die Informationspakete 50 für das nachfolgende Frame 44b geladen werden können. Für das dargestellte Beispiel bedeutet das, dass bei Wiedergabe des Proxy-Datei-Satzes 42 zuerst der Header 47 und dann das erste Informations-Paket 48a der Grund-Informations-Ebene sowie das zweite Informations-Paket 48b der Nicht-Grund-Informations-Ebene für das erste Frame 44a ausgelesen und zwischengespeichert werden können. Bei der Übermittlung der ersten Proxy-Datei 42a an den Decoder werden die weiteren Informations-Pakete 48c und 48d vor der Bereitstellung durch leere Informations-Pakete ersetzt. Das nächste ausgelesene Informations-Paket ist der Header 49 der zweiten Proxy-Datei 42b. In dieser zweiten Proxy-Datei 42b werden ebenfalls die ersten zwei Informations-Pakete 50a und 50b ausgelesen und die letzten zwei Informations-Pakete 50c und 50d durch leere Informations-Pakete ersetzt.

Das Timing, wann die Vorrichtung aufhört die Informations-Pakete 48 der ersten Proxy-Datei 42a zu laden und beginnt die Informations-Pakete 50 der zweiten Proxy-Datei 42b zu laden, kann durch zwei verschiedene Mechanismen festgelegt werden. Beispielsweise kann ein Triggern mittels eines Signals durch den Decoder oder einen anderen Empfänger des Proxy-Datei-Satzes 42 erfolgen, der die Vorrichtung anweist, das Laden der Informations-Pakete 48 zu beenden und die Proxy-Datei 42a (nach Einfügung der leeren Informations-Pakete 48c und 48d) auszugeben sowie mit dem Laden der Informations-Pakete 50 zu beginnen. Eine weitere Möglichkeit ist, dass der Proxy-Datei-Generator selbstständig den Wechsel zwischen den Frames 44a und 44b auf Basis der Framerate, die prinzipiell den Zeitraum zwischen zwei aufeinanderfolgenden Frames 44a und 44b vorgibt, und auf Basis der Auslesegeschwindigkeit der Informations-Pakete von dem Massenspeichermedium ermittelt und das Auslesen und Bereitstellen der Informations-Pakete 48 und 50 entsprechend anpasst. Hierbei kann die Vorrichtung optional einen Auslesegeschwindigkeitsermittler umfassen.

Das Ersetzten der nicht-geladenen Informationspakete 48c, 48d, 50c und 50d durch leere Informations-Pakete (Null-Pakete) im Zwischenspeicher entspricht einem Reservieren von Speicherplatz für die jeweiligen Informationspakete 48c, 48d, 50c und 50d. Alternativ ist es auch möglich, dass die leeren Informations-Pakete erst beim Bereitstellen in den Datenstrom eingefügt bzw. hineinkopiert und ausgegeben werden. Hierbei werden dann die leeren Informations-Pakete 48c, 48d, 50c und 50d auf Basis von Struktur-Informationen erzeugt und beim Ausgeben so bereitgestellt, dass die zweite Struktur der Proxy-Dateien 42a und 42b der ersten Struktur der Original-Dateien entspricht. Dies bietet den Vorteil, dass keine Reservierung des Speicherplatzes durch leere Informations-Pakete erfolgt und somit auch kein Speicherplatz verschwendet wird. Sollten zu einem späteren Zeitpunkt die Informations-Pakete 48c, 48d, 50c und 50d eingelesen und zwischengespeichert werden, werden diese typischerweise in Speicherplätzen, die nicht direkt den Speicherplätzen der Informations-Pakete 48a, 48b, 50a und 50b zugeordnet sind, eingelagert, so dass eine Fragmentierung erfolgt. Informationen über die Zusammengehörigkeit der fragmentierten Informations-Pakete 48 bzw. 50 werden in solchen Fällen in einer separaten Datenbank gespeichert, so dass ein Zusammenfügen der zusammengehörigen Informations-Pakete 48 bzw. 50 bei der Ausgabe möglich ist.

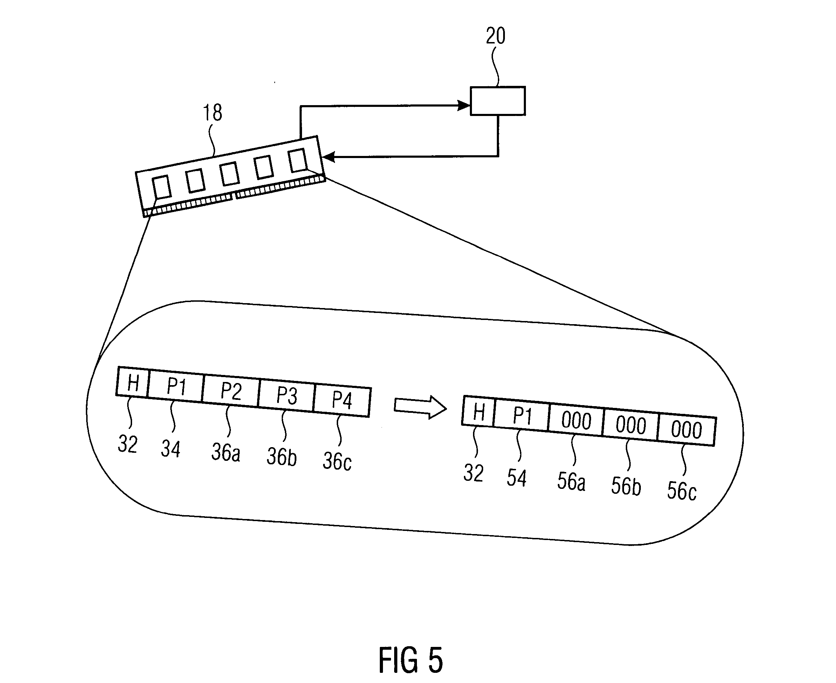

Bezug nehmend auf Fig. 1 bis Fig. 4 ist ein System zur Verarbeitung einer skalierbaren Datei beschrieben, welches eine Vorrichtung zur Zwischenspeicherung der skalierbaren Datei und eine Cachevorrichtung aufweist. Bezug nehmend auf Fig. 5 wird eine Cachevorrichtung 20 detailliert beschrieben, die die Verwaltung des Zwischenspeichers 18 gemäß einer Verdrängungsstrategie vornimmt.

Fig. 5 zeigt eine Cachevorrichtung 20, die mit dem Zwischenspeicher 18 verbunden ist oder Bestandteil derselben ist. Wie auch Bezug nehmend auf Fig. 1 erwähnt, analysiert die Cachevorrichtung 20 die in dem Zwischenspeicher 18 eingelagerten Informations-Pakete (Daten) bzw. Proxy-Dateien, die gegebenenfalls Teil eines Proxy-Datei-Satzes sind und in einem MXF- oder AVI-Container zusammengefasst sein können. Die Cachevorrichtung 20 gibt dann bei Bedarf die als Informations-Pakete von Nicht-Grund-Informations-Ebenen identifizierten Informations-Pakete frei, die entsprechend der jeweiligen Freigabestrategie freigegeben werden sollen. Hierzu können unterschiedliche Strategien angewendet werden, die im Folgenden näher erläutert werden.

Eine erste Freigabestrategie basiert darauf, dass die Speicherplätze von der Cachevorrichtung 20 als freigegeben markiert werden, die durch leere Informations-Pakete bzw. unvollständig eingelesene Informations-Pakete belegt oder reserviert sind. Diese verworfenen Informations-Pakete werden bei der Ausgabe durch leere Informations-Pakete bzw. Null-Pakete ersetzt, so dass die Struktur der eingelagerten Proxy-Datei erhalten bleibt. Die Positionen im auszugebenden Datenstrom, an den leere Informations-Pakete einzufügen sind, könnten beispielsweise anhand des Headers, in welchem die Strukturinformationen gespeichert sind oder anhand eines Freigabestatus, der parallel zum Freigeben protokolliert wird, ermittelt werden. Entsprechend einer weiteren Verdrängungsstrategie ist es möglich, dass alle Informations-Pakete verworfen werden, die nicht für die Darstellung genutzt werden können, da z.B. Informations-Pakete zwar komplett vorhanden sind, aber aus Gründen der Daten-Strom-Validität (Code-Streaming-Validität) nicht zur Darstellung an die aufgerufene Anwendung geschickt werden können, weil noch weitere Informations-Pakete (Daten-Pakete) des Daten-Stroms (Code-Streams), wie z.B. ein weiteres Informations-Paket 34 bzw. 54 der Grund-Informations-Ebene, fehlen.

Entsprechend einer weiteren Freigabestrategie können die Informations-Pakete der Nicht-Grund-Informations-Ebene, z.B. die Informations-Pakete 36a, 36b und 36c, freigegeben werden, die im Gegensatz zu der ersten Freigabestrategie allerdings vollständig eingelesen sind. Hierbei wird bevorzugter Weise das Informations-Paket, das zu der detailliertesten Erweiterungs-Informations-Ebene gehört bzw. das die Informationen mit dem höchsten Detailgrad beinhaltet, also das Informations-Paket 36c, zuerst freigegeben, bevor die Informations-Pakete 36b oder 36a in der Reihenfolge gemäß ihrer Abwärtsskalierbarkeit (ihres gespeicherten Detaillierungsgrads) freigegeben werden. Analog zu der ersten Freigabestrategie kann die Cachevorrichtung 20 das freigegebene bzw. verworfene Informations-Pakete im Freigabestatus protokollieren und dann vor der Ausgabe der Proxy-Datei bzw. des Proxy-Datei-Satzes durch ein leeres Informations-Paket 56c (bzw. 56b und 56a) ersetzen.

Die Informations-Pakete 36a, 36b und 36c können entsprechend weiteren Ausführungsbeispielen bedarfsweise so freigegeben und bei der Ausgabe durch leere Informations-Pakete 56a, 56b und 56c ersetzt werden, dass zuerst die resultierende Qualität, also das Signal/Rauschverhältnis, der Mediendatei bis auf einen vorgegebenen Bruchteil, wie z.B. 50 % oder 25 %, der ursprünglichen Qualität reduziert wird, bevor dann die erweiterte Auflösung bis auf einen vorgegebenen Bruchteil, wie z.B. 50 % oder 25 %, der ursprünglichen Auflösung reduziert wird. Alternativ wäre es auch möglich, dass die Informations-Pakete 36a, 36b und 36c derart freigegeben werden, dass die erweiterte Qualität und erweiterte Auflösung gleichzeitig bis zu einem Minimalwert, z.B. von 25 % oder 50%, der ursprünglichen Qualität und ursprünglichen Auflösung der Original-Datei bzw. des Original-Datei-Satzes reduziert werden. Eine derartige Verdrängungsstrategie ist nicht auf die dargestellten prozentualen Werte beschränkt. So ist z.B. ein Verfahren denkbar, dass im ersten Schritt die Qualität der Proxy-Dateien auf 75 % reduziert und im zweiten Schritt die Auflösung auf 75 % reduziert. In einem dritten Schritt kann dann die Qualität auf 50 % reduziert werden, während in einem vierten Schritt dann wiederum die Auflösung bis 50 % reduziert werden würde. Des Weiteren kann alternativ anstelle der Qualitäts- oder Auflösungs-Komponente auch der Informationsgehalt für andere Komponenten reduziert werden, um Speicherplatz freizugeben.

Entsprechend weiteren Ausführungsbeispielen wäre es auch möglich, die prognostizierte Auslesegeschwindigkeit bei der Selektion der zu verwerfenden Informations-Pakete hinzuzuziehen. Hierbei kann dann die Cachevorrichtung 20 bei volllaufendem Zwischenspeicher 18 genau den Speicherplatz freigeben, der bei einem erneuten Zugriff unter Echtzeitbedingung direkt vom Massenspeicher bzw. einem anderen Datenträger nachgeladen werden kann, auch wenn bei der Speicherplatzfreigabe Informations-Pakete von kompletten Frames freigegeben werden. Hierdurch würde stets die komplette Proxy-Datei bzw. eine komplette Datei eines Proxy-Datei-Satzes mit allen Informations-Ebenen einem Decoder bereitgestellt werden, da der eine Teil der Proxy-Datei im Zwischenspeicher 18 vorgehalten wird und der andere Teil direkt aus der Original-Datei vom Massenspeichermedium nachgeladen wird. Das Zusammensetzen der zwei Teile aus der Proxy-Datei oder der Original-Datei zu einem vollständigen Datenstrom kann durch die Cachevorrichtung 20 oder die Vorrichtung 10 zur Zwischenspeicherung erfolgen, die z.B. als virtuelles Dateisystem in die Zielmaschine integriert ist. Ein Vorteil hierbei wäre es, dass dieses Verfahren auch bei nicht skalierbaren Dateien einsetzbar ist.

Eine weitere Verdrängungsstrategie der Cachevorrichtung 20 ist es, die Informations-Pakete 36a, 36b und 36c der Nicht-Grund-Informations-Ebene als freigegeben zu markieren, die den meisten Speicherplatz einnehmen oder die hinsichtlich Speicherplatzgröße dem benötigten Speicherplatz am nächsten kommen bzw. dem benötigten Speicherplatz entsprechen.

Zusammenfassend ist festzustellen, dass die Speicherplatzfreigabe entsprechend einer der oben genannten Verdrängungsstrategien oder entsprechend einer Kombination der oben genannten Verdrängungsstrategien erfolgen kann. Insofern kann entsprechend weiteren Ausführungsbeispielen die Speicherplatzfreigabe iterativ erfolgen, so dass bei einem ersten Volllaufen des Zwischenspeichers 18 die Speicherplätze entsprechend der ersten Verdrängungsstrategie freigegeben werden und dann bei erneutem Volllaufen des Zwischenspeichers 18 entsprechend einer weiteren Verdrängungsstrategie entschieden wird, welche Informations-Pakete verworfen werden bzw. als freigegeben markiert werden.

Es wird des Weiteren jedoch angemerkt, dass die oben erläuterten Verdrängungsstrategien nicht unbegrenzt anwendbar sind, da z.B. die Auflösung und die Qualität einer Mediendatei nur maximal bis zu der Grund-Informations-Ebene reduzierbar ist. Für eine weiter benötigte Freigabe des Speicherplatzes wäre es entsprechend weiteren Ausführungsbeispielen möglich, dass die Cachevorrichtung 20 klassischen Ersetzungsstrategien (FIFO, LFU, LRU) zur Anwendung zu bringt, mittels denen der Restbestand der eingelagerten (Medien-) Datei entfernt wird.

An dieser Stelle wird angemerkt, dass die Verdrängungsstrategien nicht auf die genannten Verdrängungsstrategien beschränkt sind, sondern auch dass weitere Verdrängungsstrategien, die eine Modifikation der oben genannten Verdrängungsstrategien aufweisen oder aus einer Kombination der oben genannten Verdrängungsstrategien mit konventionellen Verdrängungsstrategien gebildet sind, möglich sind. Alle durch die Cachevorrichtung angewendeten Verdrängungsstrategien haben jedoch gemein, dass die Speicherplatzfreigabe so erfolgt, dass nicht zwingend eine eingelagerte Datei oder ein eingelagerter Datei-Satz vollständig verworfen werden muss, sondern dass einzelne Bestandteile (Informations-Pakete) einer Datei, die ggf. Teil eines Datei-Satzes ist, unter Ausnutzung deren Skalierbarkeit freigegeben werden.

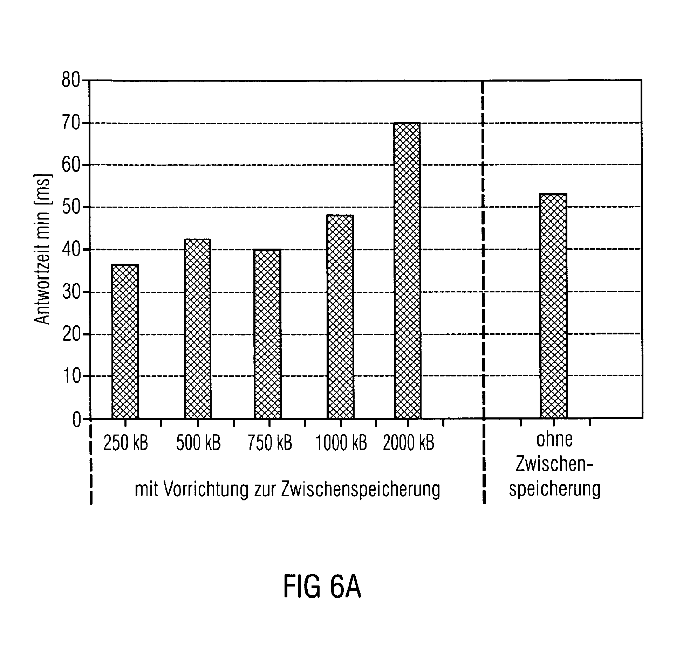

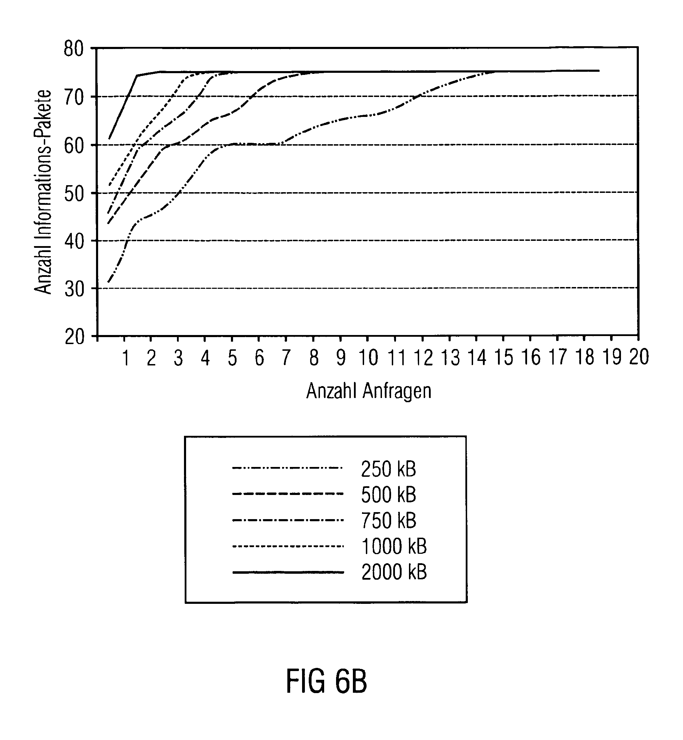

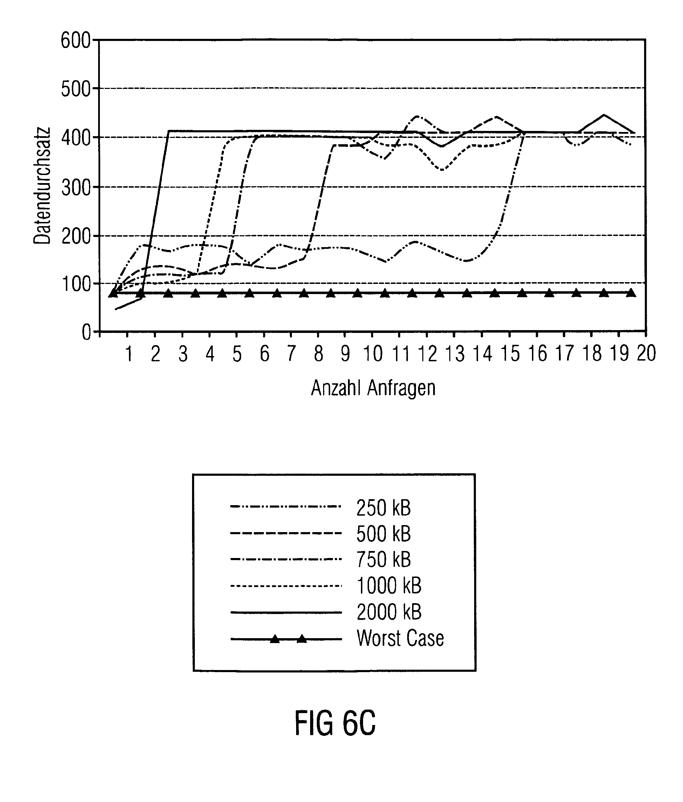

Anhand von den in Fig. 6 dargestellten Diagrammen wird die Verbesserung bei der Echtzeitwiedergabe von JPEG2000-Dateien auf einem Standard-PC durch die in Fig. 1 beschriebene Vorrichtung, die hier als virtuelles Dateisystem implementiert ist, erläutert. Wie im Folgenden beschrieben wird, kann anhand dieser Messreihe auch die effektive Einsetzbarkeit der in Fig. 5 beschriebenen Cachevorrichtung 20 gezeigt werden. Als Testdatei wird eine JPEG2000-Datei mit einer Bilderfolge genutzt, wobei jedes Bild eine durchschnittliche Dateigröße von 3,5 MB und einer Auflösung von 2 k aufweist. Je Bild stehen vier Auflösungsstufen und fünf Qualitätsstufen zur Verfügung, so dass die Datei anhand dieser Stufen skalierbar ist. Jeder Datenstrom enthält 75 Informations-Pakete. Unter der Annahme, dass das Dateisystem 24 fps liefert, um eine Echtzeitwiedergabe zu ermöglichen, beträgt die Antwortzeit ≤ 42 ms für jedes Frame, was einem Datendurchsatz von 84 MB/s entspricht.

Fig. 6a zeigt die Messergebnisse bei einer Festplattengeschwindigkeitsmessung bzw. Messung der minimalen Antwortzeit der Festplatte. Hierbei werden die minimalen Antwortzeiten bei Verwendung einer oben beschriebenen Vorrichtung bzw. eines oben beschriebenen Dateisystems zur Zwischenspeicherung der minimalen Antwortzeit ohne Zwischenspeicherung gegenübergestellt. Die minimalen Antwortzeiten wurden hierbei auf Basis eines Standard-PCs mit einer konventionellen Festplatte ermittelt. Es wird angemerkt, dass bei Nutzung der Vorrichtung zur Zwischenspeicherung die minimalen Antwortzeiten für verschiedene Blockgrößen aufgegliedert sind. Hierbei wird von einer Anfrage eines Bildes von einem Decoder ausgegangen, die an das virtuelle Dateisystem gestellt wird, wobei das virtuelle Dateisystem die Anfrage an die konventionelle Festplatte weiterleitet. Daraufhin wird die Original-Datei je nach Blockgröße mit 250 KB, 500 KB, 750 KB, 1000 KB oder 2000 KB von der Festplatte in den Zwischenspeicher übertragen und, wie oben beschrieben, die unvollständigen oder fehlenden Teile durch leere Informations-Pakete ersetzt.

Wie aus dem Diagramm zu erkennen ist, beträgt die minimale Antwortzeit für eine konventionelle Festplatte ohne Vorrichtung zur Zwischenspeicherung 52 ms, was einem maximalen Datendurchsatz von 66 MB/s entspricht. Das bedeutet, dass eine Echtzeitwiedergabe mit 24 Bildern pro Sekunde (24 fps) hier nicht möglich ist. Unter Zuhilfenahme der Vorrichtung zur Zwischenspeicherung kann eine Echtzeitwiedergabe bei einer Blockgröße von 250 KB und 750 KB ermöglicht werden, da hier die durchschnittlichen Antwortzeiten mit 36 ms bzw. 41 ms kleiner als die geforderten 42 ms sind.

Die Effizienz der Vorrichtung ist umso größer, desto größer die Dateigröße der Original-Datei ist, da eine konventionelle Festplatte nur kontinuierlich eine fixe Datenrate liefern kann und so sich folglich die Anzahl an Frames pro Sekunde bei größerer Dateigröße reduzieren würde, während sich die Performance bei Nutzung der Vorrichtung zur Zwischenspeicherung nicht verschlechtern würde. Insofern bleibt die Performance konstant, da die definierten Blockgrößen von der Original-Datei ausgelesen werden würden und die fehlenden Informations-Pakte bzw. leeren Informations-Pakete ersetzt werden würden. Bei einer Reduzierung der Blockgröße, z.B. 250 KB, würde die Antwortzeit weiter reduziert werden, was es ermöglicht, auch langsamere Massenspeicher, z.B. USB-Sticks oder optische Laufwerke, oder netzwerkgebundene Streaming-Anwendungen für derartige (Echtzeit-) Anwendungen einzusetzen. Da die Datendurchsatzleistung abhängig von der Blockgröße ist, kann eine weitere Verbesserung des Datendurchsatzes dadurch erreicht werden, dass eine dynamische Blockgröße verwendet wird. Anhand dieser Testdateien wurde ebenfalls die Verdrängungsstrategie aus dem Zwischenspeicher für skalierbare Mediendaten untersucht. Hierbei wurde festgestellt, dass eine Freigabe von Speicherplätzen, die Informations-Pakete für sehr detaillierte Nicht-Grund-Informations-Ebenen beinhalten, kein Einfluss auf die Vorschaufunktion der Mediendatei haben, da typischerweise bei der zweiten Anfrage der Mediendatei alle Informations-Pakete für alle Informations-Ebenen wieder in den Zwischenspeicher eingeladen werden können. Dies wird anhand der Fig. 6b gezeigt.

Fig. 6b zeigt die Anzahl der Informations-Pakete der Testdatei (Daten-Pakete) im Zwischenspeicher, aufgetragen über die Anzahl der Anfragen an das virtuelle Dateisystem bzw. die Vorrichtung zur Zwischenspeicherung. Wie zu erkennen ist, sind verschiedene Diagramme für die unterschiedlich großen Blockgrößen dargestellt. Hierbei ist zu erkennen, dass je größer die Blockgröße ist, desto weniger Anfragen zur vollständigen Einlagerung der Testdatei in den Zwischenspeicher (Cache-Speicher) notwendig sind. Hier kann beobachtet werden, dass bei Verwendung einer Blockgröße von 700 KB mehr als 50 % aller 75 Informations-Pakete der skalierbaren Datei nach dem ersten Zugriff auf dieselbe bereits in den Zwischenspeicher eingelagert sind, was zur Vorschauzwecken ausreichend ist. Dies gilt besonders wenn kleine Displaygrößen benutzt werden.

Fig. 6c zeigt die resultierende Datenrate zwischen dem Anforderer (Aufrufer) der Informations-Pakete, z.B. Decoder und der Vorrichtung zur Zwischenspeicherung bzw. dem virtuellen Dateisystem in Abhängigkeit von der Anzahl der Anfragen. Hierbei ist die Datenrate wiederum für unterschiedliche Blockgrößen dargestellt. Wie zu erkennen ist, steigt die Datenrate unregelmäßig an bis alle Informations-Pakete der Proxy-Datei bzw. des Proxy-Datei-Satzes vollständig in dem Zwischenspeicher zwischengespeichert sind. Die Performance wächst bis 410 MB/s an. Eine höhere Performance kann dadurch erreicht werden, dass die Vorrichtung direkt in ein nicht virtuelles Dateisystem integriert wird. Infolge dieser Übergaben wird die Gesamtsystemperformance reduziert. Eine Verlagerung des Dateisystems in dem Systemkernel beispielsweise mittels eines Ports könnte die Performance signifikant verbessern.

Auch wenn oben Aspekte der skalierbaren Datei im Zusammenhang mit einer JPEG2000-Datei erläutert wurden, wird darauf hingewiesen, dass diese Vorrichtung für jegliche skalierbaren Dateien, wie z.B. H.264 SVC-Dateien oder MPEG4-SLC-Dateien anwendbar ist.

Bezug nehmend auf Fig. 1 wird angemerkt, dass die Vorrichtung 10 bzw. der Proxy-Datei-Generator 16 entsprechend weiteren Ausführungsformen nicht nur die Proxy-Dateien 24 über die Schnittstelle 26 an den Decoder 28 ausgibt, sondern auch von diesem über die Schnittstelle 26 Steuersignale, z.B. Start-Stopp der Wiedergabe einer Bildsequenz, erhält.

Bezug nehmend auf Fig. 1 wird weiter angemerkt, dass die Vorrichtung zur Zwischenspeicherung und damit auch die Cachevorrichtung entweder Bestandteil eines Hauptspeichers, eines Prozessors, eines Decoders, eines Massenspeichermediums oder eines Controllers des Massenspeichermediums sein kann, so dass die Vorrichtung nicht zwingendermaßen auf den Einsatz an einem bestimmten Ort in der Verarbeitungskette zwischen dem Massenspeichermedium und dem Decoder beschränkt ist.

Bezug nehmend auf Fig. 3 wird angemerkt, dass die Informations-Pakete 36a, 36b und 36c der Erweiterungs-Informations-Ebene auch andere Erweiterungs-Informationen z.B. für eine weitere Detaillierung der Auflösung, der Qualität oder einer anderen Komponente in einem beschränkten Bild-Bereich aufweisen können und deshalb nicht auf Erweiterungsinformationen hinsichtlich einer erweiterten Gesamt-Bildauflösung oder Gesamt-Bildqualität eingeschränkt werden kann. Es wird ferner angemerkt, dass eine skalierbare Datei nicht zwingend eine Mediendatei ist. Beispielsweise kann eine Textdatei auch unterschiedliche Ebenen, z.B. für Gliederung, Textkörper und Grafiken, aufweisen, was eine Skalierbarkeit dieser ermöglicht.

Bezugnehmend auf Fig. 4 wird angemerkt, dass der Proxy-Datei-Satz 42 in einem speziellen Ordner oder Container, wie z.B. einem MXF- oder AVI-Container, eingelagert sein kann, der beispielsweise auch Informationen über die Anzahl an Einzelbildern bzw. Dateien sowie über die vorgegeben Framerate aufweisen kann. Des Weiteren wird angemerkt, dass eine Bildsequenz, bei der die einzelnen Frames in einer einzelnen Datei gespeichert sind, analog zwischengespeichert wird. Hier stellt dann der Proxy-Datei-Satz 42 die eigentliche Proxy-Datei dar, bei der das erste Frame 44a in den Informations-Paketen 48 in unterschiedlichen Informations-Ebenen und das zweite Frame 44b in den Informations-Paketen 50 ebenfalls in unterschiedlichen Informations-Ebenen gespeichert sind. Insofern bündelt eine solche Proxy-Datei 42 analog zu dem oben genannten Container des Proxy-Datei-Satzes 42 inhaltlich zusammengehörende Daten (Bytes). Es wird ferner angemerkt, dass die Proxy-Datei 42 beispielsweise nur einen ersten Header, nämlich den Header 47, oder je einen Header 47 und 49 je Frame 44a und 44b aufweisen kann, wobei in dem ersten Header 47 typischerweise die Strukturinformationen gespeichert sind.

Die oben beschriebene Vorrichtung zur Zwischenspeicherung kann nicht nur als Dateisystem bzw. zur Datenspeicherung genutzt werden, sondern ist auch für die Bildverarbeitung z.B. beim Transcoding, für die Bildarchivierung oder allgemein für die Dateiverwaltung von skalierbaren Bilddateien einsetzbar. Weitere Anwendungsgebiete sind die sogenannte Content-Distribution sowie das Content-Streaming.

Auch wenn Ausführungsbeispiele der vorliegenden Erfindung im Zusammenhang mit einer Cachevorrichtung zur Zwischenspeicherung beschrieben sind, wird an dieser Stelle angemerkt, dass sich die beschriebenen Aspekte auch auf ein Verfahren zur Verwaltung eines Zwischenspeichers einer Cachevorrichtung beziehen. Folglich stellen die Aspekte, die im Zusammenhang mit einer Vorrichtung beschrieben wurden auch eine Beschreibung des entsprechenden Verfahrens dar, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Im Folgenden wird ein bevorzugtes Ausführungsbeispiel der oben beschriebenen Vorrichtung im Detail mit anderen Worten diskutiert. Die Erfindungsmeldung zeigt Verfahren zur inkrementellen Verbesserung von Bilddaten bei mehrfachem Aufruf unter Verwendung einer angepassten Datei-Caching-Strategie für skalierbare Mediendaten, wie z.B. JPEG 2000 oder H.264 SVC. Weiter werden Verdrängungs- bzw. Ersetzungsstrategien für Caching-Verfahren vorgestellt, die ebenfalls für die Eigenschaften von skalierbaren (Bild-) Formaten entwickelt wurden. Gängige Caching-Verfahren verwerfen komplette Dateien - bzw. markieren alle Blöcke die zu einer zwischengespeicherten Datei gehören als frei - um dadurch Speicher für neue Daten frei zu geben. Bei der Verwendung von skalierbaren Mediendaten kann jedoch bereits das Freigeben von Teilen einer Datei - bzw. der Blöcke innerhalb des Caches, die Teile der Datei zwischen speichern - auf der einen Seite dazu führen, dass genügend Speicher für neue Daten frei wird und auf der anderen Seite trotzdem noch verwertbare Daten einer Datei, z.B. Bilder in einer geringeren Auflösung und/oder Qualität, im Cache vorhanden sind. Hierdurch muss bei einer erneuten Anfrage nicht erst vom vermeidlich langsameren Massenspeicher gelesen werden. Die hier vorgestellten Verfahren können kombiniert werden und erlauben eine Performance-Steigerung bei der Speicherung, Verwaltung und Bereitstellung von skalierbaren Mediendaten.

Digitale Film-Distribution und -Archivierung erfordert Bildkompression, um den Speicherbedarf zu reduzieren. Die Digital Cinema Initiative [1] definiert die Verwendung von JPEG 2000 [2] für die Verteilung von digitalen Filmen. Bildsequenzen können mit einer Datenrate bis zu 250 MBit/s komprimiert werden. Der gleiche Trend ist im Bereich der digitalen Archivierung zu beobachten. Auch hier scheint JPEG 2000 der Codec der Wahl zu sein, da er sowohl verlustbehaftete wie auch verlustlose Komprimierung bietet. Die Datenraten sind hier in der Regel höher im Vergleich zum digitalen Kino. Die International Organization for Standardization (ISO) hat speziell für den Bereich der digitalen Archivierung neue JPEG 2000 Profile [3] mit einer Datenrate von bis zu 500 MBit/s oder sogar verlustfreier Komprimierung definiert.

Seit Jahren war es nicht möglich, eine solche JPEG 2000-komprimierte Bildsequenz auf einem Standard-PC, ohne spezielle Beschleuniger-Karten, zu dekodieren, da die verfügbaren Rechen-Ressourcen der Prozessoren nicht ausreichten. Aktuelle Prozessor-Familien - sowie Algorithmen, die speziell auf Grafikkarten ausgeführt werden [4] - liefern mittlerweile die nötige Rechenleistung, um eine Echtzeit-Wiedergabe der Filme zu gewährleisten.

Leider zeigten diese Ergebnisse einen neuen Engpass in der Verarbeitungskette: aktuelle Consumer-Festplatten sind nicht in der Lage, die Daten in der entsprechenden Zeit zu liefern, um einen Film in Echtzeit (üblicherweise mit 24 Bildern pro Sekunde) abspielen zu können. Besonders externen Festplatten - die z.B. über USB angeschlossen werden - fehlen die notwendigen Ressourcen. Dies führt dazu, dass Abspielsoftware immer wieder Bilder während der Wiedergabe überspringen muss, auch wenn die benötigte Leistung zum Dekodieren eigentlich zur Verfügung stehen würde.

Glücklicherweise ist JPEG 2000 - neben anderen Medien-Formate wie H.264 SVC [5] oder MPEG4-SLC [6] - per Design so konstruiert, dass es eine Skalierbarkeit in verschiedenen Dimensionen, z. B. Qualität oder Auflösung, erlaubt. Hierdurch ist es möglich, bei zu geringer Rechen-Performance der Zielmaschine, bestimmte Pakete des Datenstroms der komprimierten Datei zu verwerfen; als Resultat sind die Bilder dann kleiner (Skalierung der Auflösung) oder sind qualitativ minderwertiger (Skalierung der Qualität). Die Skalierung erlaubt also eine Kompensation fehlender (Decodierungs-) Ressourcen. Hiervon wird bereits heute auf Anwendungsebene Gebrauch gemacht.

Leider nutzen aktuelle Caching-Verfahren die Funktionalität der Skalierbarkeit bisher nicht. Das führt dazu, dass bei der Verwaltung von skalierbaren Mediendaten unnötig häufig ein sog. Cache-Miss auftritt. In diesem Fall kann eine bereits eingelesene Datei - bzw. ein Block von Daten der zu einer Datei gehört - nicht mehr aus dem Cache geladen werden, da dieser den Platz für neue Daten frei geben musste. Das hat zur Folge, dass die entsprechenden Daten erneut vom üblicherweise langsameren Speicher (z.B. der Festplatte) gelesen werden müssen. Eine komplette Ersetzung aller Daten einer Datei im Cache, zur Freigabe von Speicherplatz ist bei nicht-skalierbaren Dateiformaten auch ein sinnvoller Ansatz, da ein geringerer Teil der Daten keinen Nutzen für den Aufrufer hat. Bei der Verwaltung von skalierbaren Dateien kann es jedoch sinnvoll sein, lediglich einen Teil einer Datei - bzw. die entsprechenden Blöcke im Zwischenspeicher - aus dem Cache-Speicher zu entfernen, um dadurch Speicher für weitere Daten im Cache frei zu geben.

Darüber hinaus handelt es sich bei der Ausspielung von hochqualitativem Bildmaterial für die digitale Archivierung um eine Anwendung, die über der Leistungsgrenze von aktuellen Consumer-Festplatten liegen. Dies hat zur Folge, dass Festplatten die angeforderten Daten nicht in der nötigen Zeit zur Verfügung stellen können. Auch an dieser Stelle lässt sich die Skalierbarkeit von (Bild-) Daten nutzen, da nicht zwangsläufig die komplette Datei an den Aufrufer gesendet werden muss. Durch eine Kombination der hier vorgestellten Verfahren und einer angepassten Caching Strategie für skalierbare Mediendaten können die angeforderten Bilder inkrementell in Punkto Auflösung und Qualität verbessert werden. Das Problem wurde bisher durch folgende Verfahren gelöst:
- Verwendung größerer Cache-Speicher. Hierdurch kann eine längere Bildsequenz in den Cache geladen werden. Dazu müssen die Daten jedoch mindestens zwei Mal angefragt werden. Beim ersten Mal werden die Daten in den Cache kopiert, allerdings können sie nicht in der benötigten Zeit zur Verfügung gestellt werden. Bei der zweiten Anfrage werden die Daten dann aus dem schnellen Cache gelesen.

- Erstellung von Proxy-Dateien. Hierzu werden vor der Sichtung des Materials kleinere Datenpakete, ggf. in einem anderen Datenformat, erzeugt. Dadurch wird das Datenvolumen reduziert und Echtzeitfähigkeit erreicht.
- Re-Coing mit geringerer Datenrate. Hat eine Reduktion der Bildqualität zur Folge. Muss vorher angestoßen werden. Es entstehen zwei Varianten der gleichen Mediendatei, die verwaltet werden müssen.
- Verwendung schneller(rer) Festplatten mit beweglichen Schreib-/Leseköpfen. Aktuelle Festplatten können Daten für das Anwendungsgebiet Digitales Kino auch heute schon in Echtzeit liefern. Zukünftig ist aber damit zu rechnen, das sowohl Bildwiederholraten, wie auch die Datenraten pro Sekunde selbst - und damit der benötigte Datendurchsatz - steigen werden, so dass auch diese Generation der Festplatten zusehends an ihre Grenzen kommen wird. Zudem sind diese Festplatten kostenintensiv und eine Verwendung von schnelleren Festplatten ist nicht immer möglich, besonders wenn diese über eine limitierte I/O Schnittstelle - wie z.B. USB - angeschlossen werden. Weiter können bei Anfrage von mehreren Datenströmen (paralleles Abspielen von mehreren Videos) auch hier die Daten nicht schnell genug geliefert werden.
- Verwendung von Flash-Speichern. Gleiche Vor- und Nachteile wie bei der Verwendung schneller Festplatten mit beweglichen Schreib-/Leseköpfen. Preis ist im Vergleich noch deutlich höher (Stand Dezember 2011).
- Bündelung von mehreren Festplatten im sog. RAID-Verbund (Redundante Anordnung unabhängiger Festplatten). Hierdurch werden mehrere Festplatten (je nach RAID -Verbund können unterschiedlich viele Platten genutzt werden) gebündelt, um so eine höhere Schreib-/Lesegeschwindigkeit erreichen zu können. Dies ist besonders bei festen Installationen eine häufig verwendete Methode, um die Performance von Datenspeichern zu erhöhen. Fällt jedoch bei mobilen Anwendungen (Stichwort USB) weitgehend aus.

Einlesestrategie und Caching der Datei:
Der Lösungsweg soll anhand des Kompressionsformates JPEG 2000 erläutert werden. Prinzipiell lassen sich die Verfahren auch auf andere Formate übertragen. In [7] wird beschrieben, wie skalierbare Dateien mit sog. Null-Paketen aufgefüllt werden können, um Engpässe bei der Bereitstellung von Bildern durch das Speichermedium unter Beibehaltung der originalen Struktur der Ursprungsdatei zu umgehen. Das vorgestellte Verfahren liefert so viele Daten, wie es in einem vorgegebenen Zeitraum vom Speicher lesen kann.

Unter Verwendung eines angepassten Caches für skalierbare Mediendaten kann das beschriebene Verfahren adaptiert und erweitert werden. Da davon auszugehen ist, dass das Bild bei einem vorherigen Zugriff nicht komplett vom Datenträger gelesen werden konnte, ist demnach nur ein Teil der Datei an die aufrufende Applikation geliefert worden; unvollständige oder fehlende Pakete wurden durch Null-Pakete ersetzt. Dieser kleinere Teil reicht aus, um das Bild in einer reduzierten Variante darstellen zu können.

Darüber hinaus ist ein Verfahren denkbar, das bei einem erneuten Zugriff auf die gleiche Datei an der Stelle von der originalen Datei weiter liest, an der der letzte Zugriff auf das Speichermedium - auf Grund der Zeitvorgabe - geendet hat. Wenn das Bild (bzw. die Blöcke einer Datei, die ein Bild repräsentiert) in der Zwischenzeit nicht aus dem Cache-Speicher entfernt wurde, verbessert sich z.B. die Qualität des Bildes mit jedem neuen Zugriff, da die Daten im Cache immer weiter angereichert werden und im Verlauf immer mehr Null-Pakete gegen die richtigen Daten vom Speichermedium ersetzt werden können. Im Besonderen ist auch dieses Verfahren echtzeitfähig - eine Eigenschaft, die in der Postproduktion der oben genannten Themengebiete sehr wichtig ist.

Der Unterschied zu einem herkömmlichen Verfahren liegt darin, dass diese kein Verständnis für die Skalierbarkeit haben. Würde das in [7] vorgestellte Verfahren ohne die hier beschriebene Erweiterung eingesetzt, wäre aus Sicht eines Betriebssystems die Datei bereits nach dem ersten Zugriff komplett im Cache, da das Dateisystem ja bereits eine vollständige Datei geliefert hat. Ein normaler Cache besitzt aber keine Intelligenz, die meldet, dass noch viele Null-Pakete in den zwischengespeicherten Daten vorhanden sind und würde bei einer erneuten Anfrage einfach die Daten aus dem Cache an die aufrufende Applikation liefern. Durch die Erweiterung würde der Cache versuchen, die bereits zwischengespeicherten Daten zu verbessern.

Darüber hinaus ist ein Verfahren denkbar, das die Null-Pakete im Cache nach dem ersten Zugriff durch die korrekten Daten vom Massenspeicher nicht nur dann austauscht, wenn eine erneute Anfrage an eine Datei gestellt wurde, sondern auch während Schreib-/Lese-Pausen des Massenspeichers inkrementell die Daten nachlädt um dadurch die Qualität/Auflösung der zwischengespeicherten Datei zu verbessern.

Fig. 3 zeigt die Vorgehensweise beim iterativen Einlese-Verfahren für skalierbare Mediendaten. Ein JPEG 2000 Datenstrom (engl. Codestream) besteht aus einem Header-Paket und nachfolgenden Datenpaketen (Fig. 3a) Orig.), die jeweils Bilddaten für die verschiedenen skalierbaren Dimensionen (Auflösung, Qualität, Komponente, Bereich) enthalten. Vor einem ersten Zugriff auf die Datei wird nach der Substitutionsmethode aus [7] die Struktur der Datei im Speicher des Caches nachgebaut und alle im Codestream vorhandenen Pakete mit Nullen aufgefüllt (Fig. 3a) Req 0).

Hierbei ist es unerheblich, ob tatsächlich Speicher für noch ungelesene Pakete bereits beim ersten Zugriff angelegt und mit Nullen gefüllt werden, oder ob ein Vermerk über das noch nicht geladene Paket ausreicht. Die zweite Variante stellt bereits eine Optimierung in Bezug auf Speicherauslastung dar, da hierdurch nicht unnötig Speicher für Null-Pakete angelegt wird. Bei einem konkreten Zugriff kann das System auch Nullen liefern, ohne dass diese im Cache abgelegt sind.

Nach dem ersten Zugriff stellt sich die Situation wie in Fig. 3a) (Req 1) ein: Es konnten im vorgegebenen Zeitraum bereits so viele Daten gelesen werden, dass das erste Paket (P1) komplett im Cache ist. Weiter erlaubt die Lesegeschwindigkeit in dem Beispiel, dass das nachfolgende Paket (P2) schon teilweise gelesen wurde. Auf Grund der Struktur des JPEG 2000 Codestreams dürfen aber nur komplett eingelesene Pakete an die aufrufende Applikation zurück geliefert werden, da sonst eine ungültige Repräsentation des Bildes nach der Dekodierung eintreten würde. Der erste Zugriff liefert demnach einen Codestream, im dem das erste Packet mit den Daten des originalen Bildes und alle weiteren Pakete mit Nullen gefüllt sind. Das Ergebnis ist in Abbildung 1b) (linkes Bild) zu sehen: Es ist zu erkennen, dass das Bild starke Blockartefakte zeigt (z.B. an den Kanten) und viele Details fehlen.

Nach dem ersten Zugriff auf das Bild werden die Daten aber nicht verworfen, sondern in dem hier vorgestellten Cache gespeichert. Bei einem erneuten Zugriff auf die Datei wird an der Stelle weiter gelesen, an der der erste Zugriff geendet hat. Durch die Zugriffe zwei und drei auf die gleiche Datei (Fig. 3a) (Req 2 und Req 3)) können weitere Pakete geladen und im Cache gespeichert werden. Analog zum ersten Zugriff werden nur komplette Pakete an den Aufrufer geliefert - die beiden Zugriffe liefern demnach das gleiche Ergebnis (vgl. Fig. 3b) (mittleres Bild)). Der folgende Zugriff (Fig. 3a) (Req 4)) füllt die Pakete P3 und P4 komplett auf. Die aufrufende Applikation erhält das Bild in Fig. 3b) (rechtes Bild), das eine sehr hohe Qualität liefert.

Verdrängungsmethoden für skalierbare Dateien:
Bei allen Caching-Verfahren ist der zur Verfügung stehende Speicher die begrenzende Ressource. Aus diesem Grund gibt es eine Vielzahl sog. Verdrängungsmethoden, die genau die Dateien aus dem Speicher löschen sollen, bei denen die Wahrscheinlichkeit am höchsten ist, dass diese kurzfristig nicht erneut benötigt werden. Ohne Anspruch auf Vollständigkeit sollen hier drei bekannte Verfahren genannt werden, da diese auch später mit den neu vorgestellten Verfahren kombiniert werden können:
   1. FIFO (First In First Out) - die Datei, die als erstes eingelesen wurde, wird entfernt.
   2. LRU (Least Recently Used) - die Datei, auf die am längsten nicht zugegriffen wurde, wird entfernt.
   3. LFU (Least Frequently Used) - die Datei, auf die am seltensten zugegriffen wurde, wird entfernt.

Alle Verfahren haben gemeinsam, dass sie eine Datei (bzw. die Datenblöcke, die zu einer Datei gehören) komplett aus dem Cache entfernen oder nicht. Eine Teilentfernung ist nicht angestrebt, da üblicherweise ein Teil der Datei keinen Nutzen für den Aufrufer hat.

Bei der Verwendung von skalierbaren Dateien kann es aber sinnvoll sein, nur einen Teil der Datei (bzw. die entsprechenden Blöcke) aus dem Cache zu entfernen, da dadurch noch immer das Bild (oder ein Film, ein Lied etc.) in einer reduzierten Auflösung zur Verfügung steht. Läuft der Speicher des verwendeten Caches demnach voll, werden z.B. die Pakete verworfen, die Daten für die höchste Detailstufe beinhalten. Alle anderen Pakete bleiben im Cache. Durch den frei werdenden Speicher lassen sich neue Einträge in den Cache einfügen und der Speicherengpass ist zunächst gelöst. Bei einem erneuten Volllaufen des Speichers muss dann erneut entschieden werden, welche Pakete verworfen werden. Hier könnte sich z.B. anbieten, alle Pakete zu verwerfen, die Daten für die höchste Auflösungsstufe bereithalten usw. Die hier dargelegte Vorgehensweise lässt sich dabei ideal mit den in [7] vorgestellten Verfahren kombinieren, da dadurch sicher gestellt wird, dass die Dateistruktur erhalten bleibt und aufrufende Applikationen gar nicht merken, dass sich die Daten im Cache geändert haben.

Je nach Struktur der gespeicherten Dateien (wie viele Qualitätsstufen/ Auflösungsstufen etc. stellt ein Bild zur Verfügung), lassen sich die erweiterten Verdrängungsstrategien nicht unbegrenzt anwenden, da z.B. die Auflösung und Qualität nicht weiter verringert werden kann. In diesem Fall können die klassischen Ersetzungsstrategien (FIFO, LFU, LRU) zur Anwendung kommen, die den Restbestand der Bilder komplett entfernen.

Im Besonderen sollen in dieser Erfindungsmeldung Ansprüche auf folgende Verdrängungsstrategien geltend gemacht werden:
- Auf alle in den Quelldaten vorhandenen, skalierbaren Dimensionen. Diese können in den verschiedenen skalierbaren Datenformaten unterschiedlich sein. JPEG 2000 erlaubt z.B. die Skalierung in den Dimensionen, Auflösung, Qualität, Komponente und Bereich
- Kombinierte Ausnutzung der Skalierbarkeit: Eine Kombination der enthaltenen skalierbaren Dimensionen, z.B. ein Verfahren, das erst die Qualität bis max. 50% der Originalqualität reduziert und dann die Auflösung bis max. 25% der Originalauflösung reduziert. Aber auch ein Verfahren, das die Reduktion der Qualität bis 75%, dann der Auflösung bis 75%, dann wieder der Qualität bis 50% usw. zulässt.

- Eine Strategie, die zunächst die Skalierbarkeit zur Ersetzung ausnutzt und anschließend auf die klassischen Caching-Strategien zurückgreift.
- Eine Strategie, die zunächst auf die kombinierte Skalierbarkeit (Qualität bis 50%, dann Auflösung bis 25% usw.) und anschließend auf die klassischen Caching-Strategien zurückgreift.
- Eine Strategie, die immer diejenigen Pakete (egal welcher Dimension) verwirft, die den meisten Speicher im Cache freigeben. Hierbei muss der Cache bestimmen, ob z.B. durch das Verwerfen der maximalen Auflösungsstufe oder besser dem Verwerfen der maximalen Qualitätsstufe aller Bilder mehr Speichermenge freigegeben werden kann. Schließlich werden für alle Bilder die Daten der ermittelten Dimension gelöscht.
- Eine Strategie, die immer die Pakete (egal welcher Dimension) verwirft, die den meisten Speicher im Cache frei geben. Für jede Datei wird das Datenpaket verworfen, das die meisten Daten frei gibt.
- Eine Strategie, die alle unvollständigen Pakete der skalierbaren Daten verwirft, um dadurch Speicherplatz für neue Daten frei zu geben.
- Eine Strategie, die alle Pakete verwirft, die nicht für die Darstellung genutzt werden können. Dies kann z.B. der Fall sein, wenn Pakete zwar komplett im Cache vorhanden sind, aber aus Gründen der Codestream-Validität nicht zur Darstellung an die aufrufende Applikation geschickt werden können, weil noch weitere Pakete fehlen.
- Eine Strategie, die bei volllaufendem Speicher genauso viele Daten von komplett im Speicher befindlichen Bildern (bzw. Dateien) verwirft, wie bei einem erneuten Zugriff unter Echtzeitbedingung vom Datenträger nachgelesen werden können. Hierdurch würde stets die komplette Datei geliefert: Ein Teil der Daten steht im Cache zur Verfügung, der andere Teil würde vom Datenträger nachgeladen. Insbesondere würde dieses Verfahren auch bei nicht skalierbaren Datenformaten sinnvollen Einsatz finden.

Durch die Verwendung von Caching-Verfahren unter Berücksichtigung der Skalierbarkeit kann die Leistung von Speichersystemen, insbesondere Festplatten mit beweglichen Schreib-/Lesekopf, Flash-Speicher und Speicher, die über eine Schnittstelle mit stark limitierter Datenrate (z.B. USB) angeschlossen sind, signifikant verbessert werden. Die vorgestellten Verfahren erlauben Zugriffe auf Dateien zu beschleunigen und eine höhere Qualität der verwendeten Daten bereit zu stellen als dies mit heute verfügbaren Verfahren möglich ist.

Zwar liefern die hier vorgestellten Methoden nicht immer die originalen Dateien von der Festplatte, dies ist aber in vielen Anwendungsszenarien gar nicht nötig. So ist es beispielsweise bei einer Vorschau eines Films in einem Postproduktionshaus oft nicht wichtig, dass die Daten in voller Auflösung und Qualität abgespielt werden. Viel wichtiger ist es, dass die Daten für eine kurze Vorschau nicht extra zeitaufwendig auf ein schnelleres Speichersystem kopiert werden müssen, damit eine Sichtung der Daten überhaupt erst möglich wird. Weiter werden - besonders in den oben genannten Anwendungsfeldern - immer wieder kurze Sequenzen einer Videosequenz im Schleifenmodus angesehen. In diesem Fall dienen die vorgestellten Verfahren der Echtzeitanwendung inkl. inkrementeller Verbesserung der Bildqualität bei jedem Aufruf.

Die hier vorgestellten Verfahren könnten auch auf Applikationsebene nachgestellt werden. In diesem Fall wäre nicht das Dateisystem der Block, der für Caching und entsprechende Ersetzungsstrategien verantwortlich wäre, sondern die entsprechende Endanwendung.

Weiter könnte man versuchen, nicht Null-Pakete sondern anders strukturierte Daten an die Stelle zu platzieren, an der Originaldaten fehlen.

Der Austausch von Paketen innerhalb eines Datenstroms, der eine skalierbare (Bild-) Datei beschreibt in Kombination mit einem Caching-Verfahren, das für skalierbare Dateien optimiert ist, um dadurch die Performance von Speichersystemen zu erhöhen, stellt ebenfalls ein Ausführungsbeispiel dar.

Die vorgestellte Erfindung kann in folgenden Anwendungsgebieten genutzt werden:
- Datenspeicherung
- Dateisysteme
- Bildverarbeitung, z.B. Transcoding
- Dauerablage (Archivierung) von Bildmaterial
- Dateiverwaltung für skalierbare Bilddaten
- Content-Distribution
- Content-Streaming

Ein erfindungsgemäß codiertes Signal, wie beispielsweise ein Audiosignal oder ein Videosignal oder ein Transportstromsignal, kann auf einem digitalen Speichermedium gespeichert sein oder kann auf einem Übertragungsmedium wie beispielsweise einem drahtlosen Übertragungsmedium oder einem verdrahteten Übertragungsmedium, z.B. dem Internet, übertragen werden

Das erfindungsgemäße kodierte Audiosignal kann auf einem digitalen Speichermedium gespeichert sein, oder kann auf einem Übertragungsmedium, wie beispielsweise einem drahtlosen Übertragungsmedium oder einem drahtgebundenen Übertragungsmedium, wie beispielsweise dem Internet, übertragen werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray-Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Quellen

[1] Digital Cinema Initiatives (DCI), "Digital Cinema System Specification V1.2", 7. März 2008
[2] ISO/IEC 15444-1 "Information technology - JPEG 2000 image coding system - Part 1: Core coding system", 2000
[3] ISO/IEC 15444-1:2004/Amd 2:2009 "Extended profiles for cinema and video production and archival applications", 2009
[4] V. Bruns, H. Sparenberg, S. Fossel, "Video Decoder and Methods for Decoding a Sequence of Images", Patent, unpublished
[5] H. Schwarz, D. Marpe, T. Wiegand, "Overview of the Scalable Video Coding Extension of the H.264/AVC Standard" , IEEE Transactions on Circuits and Systems fpr Video Technology, Vol. 17, No.9, 2007
[6] R. Yu, R. Geiger, S. Rahardja, J. Herre, X. Lin, H. Huang, "MPEG-4 Scalable to Lossless Audio Coding", Audio Engineering Society, San Francisco, 2004
[7] US Provisional Application 61/568/716

## Patentansprüche

1. Cachevorrichtung (20) zum Zwischenspeichern von Dateien in einem Zwischenspeicher (18), wobei die Cachevorrichtung (20) eine Verdrängungsstrategie besitzt, wonach zur Speicherplatzfreigabe eine Abwärtsskalierung einer oder mehrerer skalierbarer Dateien (12, 24, 30, 38a, 38b, 38c, 38d, 38e, 42) in dem Zwischenspeicher (18) vorgesehen ist.

2. Cachevorrichtung (20) gemäß Anspruch 1, wobei die skalierbaren Dateien (12, 24, 30, 38a, 38b, 38c, 38d, 38e, 42) Mediendateien, Videodateien oder Audiodateien sind, die jeweils Informations-Pakete (34, 48a, 50a, 54) einer Grund-Informations-Ebene und Informations-Pakete (36a - 36c, 48b - 48d, 50b - 50d, 56a - 56c) einer Nicht-Grund-Informations-Ebene aufweisen, bei denen die Nicht-Grund-Informations-Ebenen Erweiterungs-Informations-Ebenen sind, die Informationen hinsichtlich einer erweiterten Auflösung, einer erweiterten Qualität und/oder einer erweiterten Komponente umfassen.

3. Cachevorrichtung (20) gemäß Anspruch 1 oder 2, bei der gemäß der Verdrängungsstrategie die Speicherplatzfreigabe so erfolgt, dass eine Speicherbelegung durch eines der Informations-Pakete (36a - 36c, 48b - 48d, 50b - 50d, 56a - 56c) einer Nicht-Grund-Informations-Ebene der skalierbaren Datei (12, 24, 30, 38a, 38b, 38c, 38d, 38e, 42) freigegeben wird und eine Speicherbelegung durch ein Informations-Paket (34, 48a, 50a, 54) einer Grund-Informations-Ebene derselben skalierbaren Datei (12, 24, 30, 38a, 38b, 38c, 38d, 38e, 42) beibehalten wird.

4. Cachevorrichtung (20) gemäß Anspruch 2 oder 3, bei der gemäß der Verdrängungsstrategie die Speicherplatzfreigabe so erfolgt, dass eine Speicherbelegung durch ein Informations-Paket (36a - 36c, 48b - 48d, 50b - 50d, 56a - 56c) freigegeben wird, das Informationen einer detailliertesten Erweiterungs-Informations-Ebene aufweist.

5. Cachevorrichtung (20) gemäß einem der Ansprüche 2 bis 4, bei der gemäß der Verdrängungsstrategie die Speicherplatzfreigabe so erfolgt, dass die erweiterte Auflösung bis auf einen vorgegebenen Bruchteil einer ursprünglichen Auflösung reduziert wird, nachdem die erweiterte Qualität bis auf einen vorgegebenen Bruchteil einer ursprünglichen Qualität reduziert wurde oder dass die erweiterte Qualität bis auf einen vorgegebenen Bruchteil einer ursprünglichen Qualität reduziert wird, nachdem die erweiterte Auflösung bis auf einen vorgegebenen Bruchteil einer ursprünglichen Auflösung reduziert wurde.

6. Cachevorrichtung (20) gemäß einem der Ansprüche 2 bis 5, bei der gemäß der Verdrängungsstrategie die Speicherplatzfreigabe so erfolgt, dass die erweiterte Qualität und die erweiterte Auflösung gleichzeitig bis auf einen Minimalwert einer ursprünglichen Qualität und einer ursprünglichen Auflösung reduziert werden.

7. Cachevorrichtung (20) gemäß einem der Ansprüche 1 bis 6, bei der gemäß der Verdrängungsstrategie die Speicherplatzfreigabe so erfolgt, dass eine Speicherbelegung durch ein leeres Informations-Paket (48c - 48d, 50c - 50d, 56a - 56c) freigegeben wird.

8. Cachevorrichtung (20) gemäß einem der Ansprüche 1 bis 7, bei der gemäß der Verdrängungsstrategie die Speicherplatzfreigabe so erfolgt, dass eine Speicherbelegung durch ein unvollständig eingelagertes Informations-Paket (36a, 36b) freigegeben wird.

9. Cachevorrichtung (20) gemäß einem der Ansprüche 1 bis 8, bei der gemäß der Verdrängungsstrategie die Speicherplatzfreigabe so erfolgt, dass eine Speicherbelegung durch ein Informations-Paket (36a - 36c, 48b - 48d, 50b - 50d, 56a - 56c) einer Nicht-Grund-Informations-Ebene in Abhängigkeit von einer Größe eines beanspruchten Speicherplatzes freigegeben wird.

10. Cachevorrichtung (20) gemäß Anspruch 9, bei der gemäß der Verdrängungsstrategie die Speicherplatzfreigabe so erfolgt, dass die Speicherbelegung durch das größte Informations-Paket (36a - 36c, 48b - 48d, 50b - 50d, 56a - 56c) einer Nicht-Grund-Informations-Ebene freigegeben wird.

11. Cachevorrichtung (20) gemäß Anspruch 9, bei der gemäß der Verdrängungsstrategie die Speicherplatzfreigabe so erfolgt, dass die Speicherbelegung durch das größte eingelagerte Informations-Paket (36a - 36c, 48b - 48d, 50b - 50d, 56a - 56c) freigegeben wird.

12. Cachevorrichtung (20) gemäß Anspruch 9, bei der gemäß der Verdrängungsstrategie die Speicherplatzfreigabe so erfolgt, dass die Speicherbelegung durch das Informations-Paket (36a - 36c, 48b - 48d, 50b - 50d, 56a - 56c) freigegeben wird, welches den meisten Speicherplatz für ein jeweiliges Frames (44a, 44b) einnimmt.

13. Cachevorrichtung (20) gemäß Anspruch 9, bei der gemäß der Verdrängungsstrategie die Speicherplatzfreigabe so erfolgt, dass die Speicherbelegung durch das Informations-Paket (36a - 36c, 48b - 48d, 50b - 50d, 56a - 56c) freigegeben wird, das hinsichtlich des beanspruchten Speicherplatzes so groß ist, dass es in einem vorgegebenen Zeitfenster mit einer zur Verfügung stehenden Auslesegeschwindigkeit nachgeladen werden kann und dadurch komplett an den Aufrufer gesendet werden kann.

14. Cachevorrichtung (20) gemäß einem der Ansprüche 1 bis 13, die ausgebildet ist, um einen Freigabestatus zu protokollieren, der freigegeben Speicherbelegungen anzeigt.

15. Cachevorrichtung (20) gemäß einem der Ansprüche 1 bis 14, wobei die Cachevorrichtung (20) mit einem Proxy-Datei-Generator (16) verbunden ist, der ausgebildet ist, um eine Proxy-Datei (24, 38a, 38b, 38c, 38d, 38e, 42, 52) in dem Zwischenspeicher (18) so zu erzeugen, dass die Proxy-Datei (24, 38a, 38b, 38c, 38d, 38e, 42, 52) aus sich heraus in eine Struktur überführbar ist oder die Struktur direkt aufweist, die einer weiteren Struktur einer zwischenzuspeichernden Dateien (12, 30) entspricht,
wobei der Proxy-Datei-Generator (16) ferner ausgebildet ist, um ein erstes Informations-Paket (34, 48a, 50a, 54) einer Grund-Informations-Ebene aus der zwischenzuspeichernden Datei (12, 30) auszulesen und in die Proxy-Datei (24, 38a, 38b, 38c, 38d, 38e, 42, 52) an einer durch die zweite Struktur festgelegten Stelle einzufügen und um die Proxy-Datei (24, 38a, 38b, 38c, 38d, 38e, 42, 52) in der zweiten Struktur auszugeben, so dass in der zweiten Struktur zumindest eines der Informations-Pakete (36a - 36c, 48b - 48d, 50b - 50d, 56a - 56c) einer Nicht-Grund-Informations-Ebene durch ein leeres Informations-Paket (48c - 48d, 50c - 50d, 56a - 56c) ersetzt ist.

16. Cachevorrichtung (20) gemäß einem der Ansprüche 1 bis 15, die ausgebildet ist, die die ein oder mehreren skalierbaren Dateien (24, 38a, 38b, 38c, 38d, 38e, 42) so auszugeben, dass eine Struktur der skalierbaren Datei (24, 38a, 38b, 38c, 38d, 38e, 42) einer Struktur einer zwischenzuspeichernden Datei (12, 30) entspricht.

17. Cachevorrichtung (20) gemäß Anspruch 16, die ausgebildet ist, ein oder mehrere verworfene Informations-Pakete (56a, 56b, 56c) bei der Ausgabe der ein oder mehreren skalierbaren Dateien (24, 38a, 38b, 38c, 38d, 38e, 42) durch ein oder mehrere leere Informations-Pakete (48c - 48d, 50c - 50d, 56a - 56c) zu ersetzen, so dass die ein oder mehreren skalierbaren Dateien (24, 38a, 38b, 38c, 38d, 38e, 42) gemäß der Struktur der zwischenzuspeichernden Dateien (12, 30) ausgegeben werden.

18. Cachevorrichtung (20) gemäß einem der Ansprüche 1 bis 17, wobei der Zwischenspeicher (18) eine erste Schnittstelle (22) aufweist, mittels der der Zwischenspeicher (18) mit einem Massenspeicher (14), auf dem die zwischenzuspeichernden Dateien (12, 30) gespeichert sind, verbindbar ist; und
wobei der Zwischenspeicher (18) eine zweite Schnittstelle (26) aufweist, mittels der der Zwischenspeicher (18) mit einem Prozessor (28) oder einem Decoder (28) verbindbar ist.

19. Cachevorrichtung (20) gemäß einem der Ansprüche 1 bis 18, wobei die Cachevorrichtung (20) eine weitere Verdrängungsstrategie besitzt, bei der eine Speicherbelegung durch die Datei, die als erstes zwischengespeichert wurde, freigegeben wird, und/oder bei der eine Speicherbelegung durch die Datei, auf die am längsten nicht zugegriffen wurde, freigegeben wird, und/oder bei der eine Speicherbelegung durch die Datei, auf die am seltensten zugegriffen wurde, freigegeben wird.

20. Verfahren zur Verwaltung eines Zwischenspeichers (18) einer Cachevorrichtung (20), mit dem Schritt:
Freigeben von Speicherplatz gemäß einer Verdrängungsstrategie, wonach zur Zwischenspeicherung eine Abwärtsskalierung einer oder mehrerer skalierbarer Dateien (12, 24, 30, 38a, 38b, 38c, 38d, 38e, 42) in dem Zwischenspeicher (18) vorgesehen ist.

21. Computerprogramm mit einem Programmcode zur Durchführung des Verfahrens gemäß Anspruch 20, wenn das Programm auf einem Computer abläuft.
